# EUROPEAN PATENT SPECIFICATION

(11) **EP 2 024 610 B1**
(45) Date of publication and mention of the grant of the patent: **26.10.2011**
(21) Application number: 07755022.6
(22) Date of filing: 05.04.2007
(51) Int. Cl.: F01K 25/06

(54) **SYSTEM AND METHOD FOR BASE LOAD POWER GENERATION**
SYSTEM UND VERFAHREN ZUR GRUNDLASTENERGIEERZEUGUNG
SYSTÈME ET PROCÉDÉ POUR GÉNÉRATION D'ÉNERGIE DE CHARGE DE BASE

(30) Priority: 05.04.2006 US 399287
(43) Date of publication of application: 18.02.2009
(73) Proprietor: Kalex LLC, Belmont, CA 94002 (US)
(72) Inventor: KALINA, Alexander I., Hillsborough, CA 94010-7313 (US)
(74) Representative: McCall, John Douglas
(86) International application number: PCT/US2007/008608
(87) International publication number: WO 2007/117619

(56) References cited:
- EP-A2- 0 949 406
- EP-A2- 0 952 316
- US-A- 6 035 642
- US-A1- 2003 154 718
- US-A1- 2005 235 645
- GAJEWSKI W ET AL: "DER KALINA-PROZESS" VGB KRAFTWERKSTECHNIK, VGB KRAFTWERKSTECHNIK GMBH. ESSEN, DE, vol. 69, no. 5, 1 May 1989 (1989-05-01), pages 477-483, XP000028691 ISSN: 0372-5715
- ZERVOS N G ET AL: "INNOVATIVE KALINA CYCLE PROMISES HIGH EFFICIENCY" POWER, MCGRAW-HILL COMPAGNY, NEW YORK, NY, US, vol. 136, no. 4, 1 April 1992 (1992-04-01) , pages 177-179, XP000264715 ISSN: 0032-5929

## Description

### BACKGROUND OF THE INVENTION

### 1. Field of the Invention

The present invention relates to a system and process for the generation of electrical power or other useable energy in base load applications by converting thermal energy in working fluid stream into the power or other useable energy.

More particularly, the present invention relates to a system and process for the generation of electrical power or other useable energy in base load applications, the system and process involves converting thermal energy into electrical power or other useable energy from three different compositional streams of a multi-component working fluid, one of the streams being a lean working fluid stream pressurized into its super-critical state before being vaporized in a heat recovery vapor generator, another stream is a rich working fluid steam and the third stream is an intermediate working fluid stream, where the system and process of this invention has increased overall efficiency.

### 2. Description of the Related Art

In the process of the combustion of fuels, a minimum quantity of air, that is theoretically necessary for complete combustion of the fuel, is such that all oxygen contained in the air supplied to the combustion is completely consumed or used. Such a process is referred as a stoichiometric process, and corresponds to the highest temperature in the combustion zone given a combustion process that uses air as the oxidant.

However, in actual practice, all current industrially used combustion systems operate with some excess of air, *i.e*., an amount of air in excess of the stoichiometric amount, that is necessary to assure the complete combustion of the fuel. This excess air results in a lowering of the temperature of combustion, The greater the excess of air, the lower the temperature of combustion and the less heat available for conversion to a useable from of energy.

However, the greater the excess of air, the greater the flow rate of the produced flue gases. Because the flue gas cannot be cooled to a temperature equal to the initial temperature of the supplied air, the quantity of heat rejected into the atmosphere by the flue gas increases with increasing amounts of excess air. This results in a reduction of the efficiency of the combustion system.

Therefore, in conventional combustion systems, in order to operate with a minimum of excess of air, the tubes in which the boiling of a working fluid of a power cycle occurs, (so-called "waterwall" tubes), are located directly in the combustion zone. This allows the heat of combustion to be partially absorbed by the boiling of the working fluid, and thus controls the temperature in the combustion zone. Such systems are known as conventional boiler combustion systems. These systems are, perforce, expensive and complex structures that require a high degree of maintenance, especially due to the fact that the waterwall tubes are subjected to very high thermal stresses.

On the other hand, in so-called fluidized bed combustors, (which have several advantages), the excess of air is usually very high due to the fact that there is a substantial flow of air needed to maintain the fluidized bed. As a result, fluidized bed boiler/combustors have substantially reduced efficiencies.

In general, it would be extremely desirable, and would present a great simplification, if combustion were to be performed in a separate combustion chamber without the need for internal cooling by waterwall tubes, while at the same time operating with a minimum of excess air. All heat produced by the combustion would thus be accumulated in a stream of hot flue gas which could then be utilized in a heat recovery steam generator **(HRSG)** or a heat recovery vapor generator **(HRVG). HRSG** and **HRVG** systems are relatively simple heat exchangers which are substantially less expensive than conventional boilers. A combustion system with such a structure would be substantially more reliable and less expensive than a conventional boiler/combustion system.

But in such a case, the temperature in the combustion chamber would become unacceptably high, such that the materials out of which the combustion chamber is constructed would be unable to withstand such temperatures. Moreover, the flue gases produced would have such a high temperature that they would not be able to be used directly to provide heat to the heat exchangers of a power system, especially if these heat exchangers are used to superheat vapor.

Separate combustion chambers, without internal waterwall cooling, have been used for the combustion of low quality fuels, particularly those with high water contents, such as biomass. However, even in these cases, the temperature of the flue gas produced is too high to be directly used in the heat exchangers of a power system.

Usually, in such cases, the hot flue gas is used to heat an intermediate heat carrying fluid, which in its turn is then used to provide heat to the heat exchangers of the power system. However such an arrangement results in the addition of substantial complications to the entire system.

Thus, there is a need in the art for a system and process for the generation of power in base load applications, converting thermal energy into power utilizing supercritical pressure, with the aim of increasing the overall efficiency of the system
[0012a] US 60350642A (Peletz Jr. Lawrence) describes a "refurbished" Rankine cycle vapor generator initially having a plurality of Rankine heaters for supporting a Rankine cycle subsystem. At least one of the heaters is removed and replaced with a non-Rankine heater for a Kalina cycle subsystem. The vapor generator comprises a first plurality of tubes for receiving a first working fluid and a second plurality of tubes for receiving a second working fluid. The first plurality of tubes are directed along a first path exposed to heat to increase the temperature of the first working fluid. The second plurality of tubes are directed along a second path exposed to heat to increase the temperature of the second working fluid. The first plurality of tubes supply the heated first working fluid to components of a Rankine cycle subsystem and the second plurality of tubes supply the heated second working fluid to components of a Kalina cycle subsystem.
[0012b] US 2003/15471 A1 (Nayar, Ramesh) describes an energy production process which includes transforming a first working fluid having at least two components into usable energy and a first exhaust stream. At least a portion of the first exhaust stream is diverted. Heat is transferred from the diverted first exhaust stream to the first working fluid, thereby partially condensing the diverted first exhaust stream to form a partially condensed diverted first exhaust stream.
This is separated into a vapor stream and a liquid stream and a vapor stream is "transformed" into usable energy.
[0012c] EP 0949406 A2 (General Electric) discloses a method of heating gas turbine fuel in a combined cycle power plant using multi-component flow mixtures.
[0012d] US 2005/235645 (Kalina, Alexander) describes a new thermodynamic cycle where a multi-component working fluid is fully vaporized in a boiler using waste heat streams such as flue gas streams from cement kilns so that energy can be extracted from the streams and converted to usable electrical or mechanical energy in a turbine subsystem. After extraction, the spent stream is fully condensed in a distillation-condensation subsystem using air and/or water coolant streams.

### SUMMARY OF THE INVENTION

The present invention provides a process for extracting energy from a multi-component working fluid comprising the steps of:
forming a fully condensed, higher pressure, rich working fluid stream from a spent rich working fluid stream and a rich working fluid stream, where the rich working fluid stream has a high concentration of a low boiling component of the multi-component working fluid,
forming a fully condensed, higher pressure, lean working fluid stream from a first portion of a partially vaporized, higher pressure, rich working fluid stream and a leaner liquid stream having a lower concentration of the low boiling component of the multi-component fluid, where the fully condensed, higher pressure, lean working fluid stream has a low concentration of the low boiling component of the multi-component working fluid,
vaporizing a second portion of the partially vaporized, higher pressure, rich working fluid stream with heat derived from a mixed flue gas stream and a spent intermediate working fluid stream to form a fully vaporized, higher pressure, rich working fluid stream,
vaporizing the fully condensed, higher pressure, lean working fluid stream with heat derived from the mixed flue gas stream and a spent, intermediate pressure, rich working fluid stream to form a fully vaporized, higher pressure, lean working fluid stream and a cooled, spent, intermediate pressure rich working fluid stream,
extracting a first amount of electric power or other useable energy from a portion of thermal energy in the fully vaporized, higher pressure, lean working fluid stream in a first high pressure turbine to form a spent lean working fluid stream,
forming a fully vaporized intermediate working fluid stream from a first portion of the fully vaporized high pressure rich working fluid stream and a reheated spent lean working fluid stream, where the fully vaporized intermediate working fluid stream has a concentration of the low boiling component of the multi-component fluid between the high concentration of the rich working fluid and the low concentration of the lean working fluid,
extracting a second amount of electric power or other useable energy from a portion of thermal energy in the fully vaporized intermediate working fluid stream in a low concentration turbine (LCT) to form the spent intermediate working fluid stream,
extracting a third amount of electric power or other useable energy from a portion of thermal energy in a second portion of the high pressure rich working fluid stream in a second high pressure turbine (HPT) to form the spent, intermediate pressure rich working fluid stream, and
extracting a fourth amount of electric power or other useable energy from a portion of thermal energy in the cooled, spent, intermediate pressure rich working fluid stream in a low pressure turbine (LPT) to form the spent rich working fluid stream.

The present invention also provides a system for extracting energy in a thermodynamic cycle comprising:
a vaporizing subsystem comprising a heat recovery vapour generator either alone or in combination with a separate heat exchange unit adapted to (a) fully vaporize a higher pressure, lean working fluid stream comprising a first portion of a partially vaporized, higher pressure rich working fluid stream and a very lean liquid stream, (b) fully vaporize a first portion of a higher pressure, rich working fluid stream, and (c) reheat a spent lean working fluid stream from heat derived from a mixed flue gas stream forming a fully vaporized, higher pressure
lean working fluid stream, a fully vaporized, higher pressure rich working fluid stream , and a reheated, spent lean working fluid stream,
an energy conversion subsystem including:
a first high pressure turbine adapted to convert a portion of thermal energy in the fully vaporized, higher pressure lean working fluid stream into a first amount of useable energy forming the spent lean working fluid stream, a low concentration turbine adapted to convert a portion of thermal energy in a fully vaporized. intermediate working fluid stream into a second amount of useable energy, where the fully vaporized intermediate working fluid stream comprises a first portion of a pressure adjusted, fully vaporized, rich working fluid stream and the reheated, spent lean working fluid stream forming a spent intermediate working fluid stream, and a rich working fluid stream extraction unit including:
   a second high pressure turbine or stage adapted to convert a portion of thermal energy in with a second portion of the fully vaporized, higher pressure rich working fluid stream into a third amount of useable energy forming a spent, intermediate pressure rich working fluid stream and
   a low pressure turbine or stage adapted to convert a portion of heat associated with a cooled, spent, intermediate pressure rich working fluid stream into a fourth amount of useable energy to form a spent rich working fluid stream, a separation subsystem including:
      a scrubber adapted to scrub and separate a first portion of a cooled, spent intermediate working fluid stream and a first portion of a lean liquid stream into a first enriched vapor stream and the very lean liquid stream, and
      a separator adapted to separate a mixed stream comprising a cooled second portion of the cooled, spent intermediate working fluid stream and the first enriched vapor stream into a second enriched vapor stream and the lean liquid stream ,
   a condensation subsystem comprising :
      a condenser or a condensation and thermal compression subsystem adapted to fully condense the spent rich working fluid stream into a first fully condensed rich working fluid stream, and
   a heat exchange subsystem including:
      a first heat exchange unit adapted to fully condense a second rich working fluid stream comprising the second enriched vapor stream and a second portion of the lean liquid stream and to heat a combined, higher pressure rich working fluid stream comprising a first fully condensed, higher pressure rich working fluid stream and a second fully condensed, higher pressure rich working fluid stream,
      a second heat exchange unit adapted to partially vaporize the combined rich working fluid stream and to cool the second portion of the spent intermediate working fluid stream forming a partially vaporized, higher pressure rich working fluid stream and the cooled second portion of the cooled, spent intermediate working fluid stream, and
      a third heat exchange unit adapted to vaporize a second portion of the partially vaporize the combined rich working fluid stream and to cool the spent intermediate working fluid stream forming the vaporized, higher pressure rich working fluid stream and the cooled spent intermediate working fluid.

### BRIEF DESCRIPTION OF THE DRAWINGS

The invention can be better understood with reference to the following detailed description together with the appended illustrative drawings in which like elements are numbered the same: Power System/ Apparatus;

Figure 1 depicts a first embodiment of a power extraction system and apparatus of this invention; [0018] Figure 2 depicts an expanded view of a computational diagram of the heat recovery vapor generator HRVG subsystem of Figure 1;

Figure 3 depicts a second embodiment of a power extraction system and apparatus of this invention; Condensation and Thermal Compression Subsystem CTCSS;

Figure 4 depicts a block diagram of a preferred embodiment of CTCSS Variant Ia of a condensation and thermal compression subsystems;

Figure 5 depicts a block diagram of another preferred embodiment of CTCSS Variant Ib of a condensation and thermal compression subsystems;

Figure 6 depicts a block diagram of a preferred embodiment of CTCSS Variant 2a of a condensation and thermal compression subsystems;

Figure 7 depicts a block diagram of a preferred embodiment of CTCSS Variant 2b of a condensation and thermal compression subsystems;

Figure 8 depicts a block diagram of a preferred embodiment of CTCSS Variant 3a of a condensation and thermal compression subsystems;

Figure 9 depicts a block diagram of a preferred embodiment of CTCSS Variant 3b of a condensation and thermal compression subsystems;

Figure 10 depicts a block diagram of a preferred embodiment of CTCSS Variant 4a of a condensation and thermal compression subsystems;

**Figure 11** depicts a block diagram of a preferred embodiment of **CTCSS Variant 4b** of a condensation and thermal compression subsystems;

**Figure 12** depicts a block diagram of a preferred embodiment of **CTCSS Variant 5a** of a condensation and thermal compression subsystems; and

**Figure 13** depicts a block diagram of a preferred embodiment of **CTCSS Variant 5b** of a condensation and thermal compression subsystems.

### DETAILED DESCRIPTION OF THE INVENTION

The inventors have found that a power system and apparatus can be constructed using heat from a high temperatures combustor to extract heat from three different compositional stream derived from a single multi-component fluid, where the system and apparatus includes three different energy extraction components designed to three working fluid stream of different compositional makeup.

The present invention relates to a method for extracting energy from a multi-component working fluid comprising the step of forming a fully condensed, high pressure rich working fluid stream from a spent rich working fluid stream, where the rich working fluid stream has a high concentration of a low boiling component of the multi-component working fluid. The method also includes the step of forming a fully condensed, high pressure lean working fluid stream from a first portion of a partially vaporized, high pressure rich working fluid stream and a very lean liquid stream having a very low concentration of the low boiling component of the multi-component fluid, where the lean working fluid stream has a low concentration of the low boiling component of the multi-component working fluid. The method also includes the step of vaporizing a second portion of the partially vaporized, high pressure rich working fluid stream with heat derived from a mixed flue gas stream and a spent intermediate working fluid stream to form a fully vaporized high pressure rich working fluid stream. The method also includes the step of vaporizing the fully condensed lean working fluid stream heat derived from the mixed flue gas stream and a spent, intermediate pressure rich working fluid stream to form a fully vaporized high pressure lean working fluid stream and a cooled, spent, intermediate pressure rich working fluid stream. The method also includes the step of extracting a first amount of electric power or other useable energy from a portion of thermal energy in the fully vaporized high pressure lean working fluid stream in a first high pressure turbine to form a spent lean working fluid stream. The method also includes the step of forming a fully vaporized intermediate working fluid stream form a first portion of the fully vaporized high pressure rich working fluid stream and a reheated spent lean working fluid stream, where the intermediate working fluid stream has a concentration of the low boiling component of the multi-component fluid between the high concentration of the rich working fluid and the low concentration of the lean working fluid. The method also includes the step of extracting a second amount of electric power or other useable energy from a portion of thermal energy in the fully vaporized intermediate working fluid stream in a low concentration turbine to form the spent intermediate working fluid stream. The method also includes the step of extracting a third amount of electric power or other useable energy from a portion of thermal energy in a second portion of the high pressure rich working fluid stream in a second high pressure turbine to form the spent, intermediate pressure rich working fluid stream. The method also includes the step of extracting a fourth amount of electric power or other useable energy from a portion of thermal energy in the cooled, spent, intermediate pressure rich working fluid stream in a low pressure turbine to form the spent rich working fluid stream.

The present invention relates to an apparatus for extracting energy in a thermodynamic cycle comprising a vaporizing subsystem adapted to (a) fully vaporize a higher pressure, lean working fluid stream comprising a first portion of a partially vaporized, higher pressure rich working fluid stream and a very lean liquid stream, (b) fully vaporize a first portion of a higher pressure, rich working fluid stream, and (c) reheat a spent lean working fluid stream from heat derived from a mixed flue gas stream forming a fully vaporized, higher pressure lean working fluid stream, a fully vaporized, higher pressure rich working fluid stream, and a reheated, spent lean working fluid stream. The apparatus also includes an energy conversion subsystem including: (a) a first high pressure turbine adapted to convert a portion of thermal energy in the fully vaporized, higher pressure lean working fluid stream into a first amount of useable energy forming the spent lean working fluid stream, (b) a low concentration turbine adapted to convert a portion of thermal energy in a fully vaporized, intermediate working fluid stream into a second amount of useable energy, where the fully vaporized intermediate working fluid stream comprises a first portion of a pressure adjusted, fully vaporized, rich working fluid stream and the reheated, spent lean working fluid stream forming a spent intermediate working fluid stream, and (c) a rich working fluid stream extraction unit including (i) a second high pressure turbine or stage adapted to convert a portion of thermal energy in with a second portion of the fully vaporized, higher pressure rich working fluid stream into a third amount of useable energy forming a spent, intermediate pressure rich working fluid stream and (ii) a low pressure turbine or stage adapted to convert a portion of heat associated with a cooled, spent, intermediate pressure rich working fluid stream into a fourth amount of useable energy to form a spent rich working fluid stream. The apparatus also includes a separation subsystem including (a) a scrubber adapted to scrub and separate a first portion of a cooled, spent intermediate working fluid stream and a first portion of a lean liquid stream into a first enriched vapor stream and the very lean liquid stream, and (b) a separator adapted to separate a mixed stream comprising a cooled second portion of the cooled, spent intermediate working fluid stream and the first enriched vapor stream into a second enriched vapor stream and the lean liquid stream. The apparatus also includes a condensation subsystem adapted to fully condense the spent rich working fluid stream into a first fully condensed rich working fluid stream. The apparatus also includes a heat exchange subsystem including: (a) a first heat exchange unit adapted to fully condense a second rich working fluid stream comprising the second enriched vapor stream and a second portion of the lean liquid stream and to heat a combined, higher pressure rich working fluid stream comprising a first fully condensed, higher pressure rich working fluid stream and a second fully condensed, higher pressure rich working fluid stream, (b) a second heat exchange unit adapted to partially vaporize the combined rich working fluid stream and to cool the second portion of the spent intermediate working fluid stream forming a partially vaporized, higher pressure rich working fluid stream and the cooled second portion of the cooled, spent intermediate working fluid stream, and (c) a third heat exchange unit adapted to vaporize a second portion of the partially vaporize the combined rich working fluid stream and to cool the spent intermediate working fluid stream forming the vaporized, higher pressure rich working fluid stream and the cooled spent intermediate working fluid. The apparatus can also a pressurizing subsystem including: (a) a first pump adapted to increase a pressure of the first fully condensed rich working fluid stream to form the first fully condensed, higher pressure rich working fluid stream, (b) a second pump adapted to increase a pressure of the second fully condensed rich working fluid stream to form the second fully condensed, higher pressure rich working fluid stream, (c) a third pump adapted to increase a pressure of the fully condensed lean working fluid stream to form the fully condensed, high pressure lean working fluid stream.

The system and method of this invention is designed to utilizes a combustor as disclosed in United States Patent Application Serial No.11/069769, filed 1 March 2005; however the system and method of this invention can be used with any combustor or combustion unit known in the art. The present method and system is also designed to utilize a condensation thermal compression subsystem as disclosed in United States Patent Application Serial No. 10/984021, filed 8 November 2004; however, this method and system can also utilize any other condenser or condensation subsystem.

The working fluids suitable for use in the systems of this inventions are multi-component fluids that comprises a lower boiling point material - the low boiling component - and a higher boiling point material - the high boiling component. The working fluid, a multi-component mixture of at least two components with different normal boiling temperatures. In the certain embodiments of the system, the mixture consists of water and ammonia, but other working fluids, such as a mixture of hydrocarbons, freons or other substances can be used as well. In other embodiments, the working fluids include, without limitation, an ammonia-water mixture, a mixture oftwo or more hydrocarbons, a mixture of two or more freons, a mixture of hydrocarbons and freons, or the like. In other embodiments, the working fluid comprises a mixture of water and ammonia. However, the fluid can comprise mixtures of any number of compounds with favorable thermodynamic characteristics and solubilities. Of course, the exact composition of the working fluid changes in different portions of the system where rich and lean streams are formed cooled or heated, compresses or expanded in order to satisfy the overall objective of the system.

The dividing and combining valves used in this invention are well known in the art and are used to split or combine streams. Dividing valve are designed to control the flow rate of the substreams to maintain the system operation.

### First Embodiment of the System and Method of This Invention

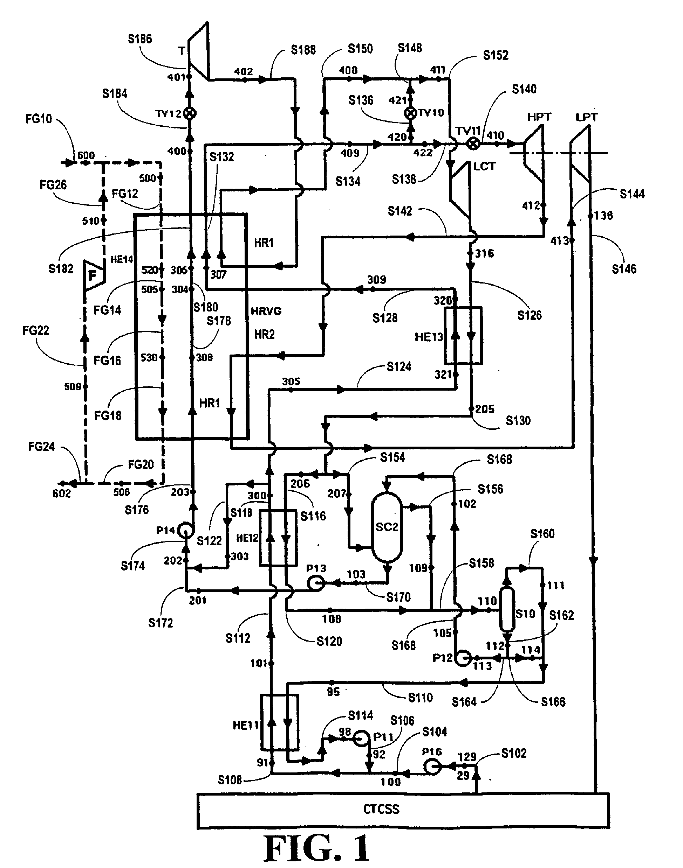

Referring now to **Figure 1****,** a schematic block diagram of one embodiment of the system of this inventions, generally **100,** is shown. In the system **100,** a first fully condensed rich working fluid stream **S102** having parameters as at a point **29,** where the stream **S102** has a high concentration of the low boiling component of the multi-component working fluid, *i.e.,* the stream **S102** comprises a rich working fluid stream, exits from a Condensation and Thermal Compression Subsystem **CTCSS,** where it was fully condensed. The Condensation and Thermal Compression Subsystem **CTCSS** can be a simple condenser, but is generally a more complex subsystem as described below. The stream **S102** having the parameters as at the point **29,** redesignated as a point **129,** is then pumped by a pump **P16,** to a desired higher pressure, to form a higher pressure fully condensed rich working fluid stream **S104** having parameters as at a point **100.** Although the stream **S102** having the parameters at as the point **129** is pressurized to the desired higher pressure in the pump **P16,** the stream **S102** having the parameters as at the point **29** or **129** exiting the Condensation and Thermal Compression Subsystem **CTCSS** can have the desired pressure without the pump **P16.**

The stream **S104** having the parameters as at the point **100** is then mixed with a second higher pressure fully condensed rich working fluid stream **S106** having parameters as at a point **92,** forming a combined fully condensed rich working fluid stream **S108** having parameters as at a point **91.** The stream **S106** having the parameters as at the point **92** has the same or substantially the same composition and pressure as the stream **S104** having the parameters as at the point **100** (as described below). The term substantially as used here means that the composition and pressure and other parameters of the stream **S106** having the parameters as at the point **92** are within about 5% of the parameters as at the point **100** of the stream **S104.**

The combined rich working fluid stream **S108** having parameters as at a point **91** passes through a first heat exchanger **HE11,** where it is heated in counterflow by a mixed rich working fluid stream **S110** having parameters as at a point **95** in a first heat exchange process **95-98** and **91-101** (as described below) to form a heated rich working fluid stream **S112** having parameters as at a **101** and a second fully condensed rich working fluid stream **S114** having parameters as at a point **98.** The heated stream **S112** having the parameters as at the point **101** corresponds to, or corresponds closely to, a state of saturated liquid, where the term closely means that the parameters are within about 5% of a state of saturated liquid. The heated stream **S112** having the parameters as at the point **101** then passes through a boiler-condenser **HE12,** where it is heated in counterflow by a first mixed intermediate working fluid substream **S116** having parameters as at a point **206** in a second heat exchange process **206-108** and **101-300** (as described below) forming a partially vaporized rich working fluid stream **S118** having parameters as at point **300** and a cooled mixed intermediate working fluid stream **S120** having parameters as at a point **108.** The partially vaporized rich working fluid stream **S118** having the parameters as at the point **300** corresponding to or closely to a state of saturated vapor, where the closely means that the parameters are within about 5% of a state of saturated vapor.

Thereafter, the stream **S118** having the parameters as at the point **300** is split into a first partially vaporized rich working fluid substream **S122** having parameters as at a point **303** and a second partially vaporized rich working fluid substream **S124** having parameters as at a point **305** or **321.** The substream **S124** having the parameters as at the point **305** then passes through a recuperative heat exchanger **HE13,** where it is heated in counterflow by a spent intermediate working fluid stream **S126** having parameters as at a point **316** in a third heat exchange process **316-205** and **305-320** or **321-320** (as described below) forming a vapor rich working fluid stream **S128** having parameters as at a point **320** or **309** (new point designation) and a cooled spent intermediate working fluid stream **S130** having parameters as at a point **205.**

The stream **S128** having the parameters as at the point **309** then enters into an upper section **HR3** of a Heat Recovery Vapor Generator **HRVG,** where it is heated in counterflow by a third flue gas stream **FG14** having parameters as at a point **520** in a first **HRVG** heat exchange process **520-505** or **309-307** (as described below) forming a heated vapor rich working fluid stream **S132** having parameters as at a point **307** and a fourth flue gas stream **FG16** having parameters as at a point **505.** The heated stream **S132** having the parameters as at the point **307** is then further heated, in counterflow by a second flue gas stream **FG12** having parameters as at a point **500** in a second **HRVG** heat exchange process **500-520** or **307-409** to form a super-heated vapor rich working fluid stream **S134** having parameters as at a point **409** and the third flue gas stream **FG14** having the parameters as at the point **520.** The stream **S134** having the parameters as at the point **409** is then split into a first super-heated vapor rich working fluid substream **S136** having parameters as at a point **420** and a second super-heated vapor rich working fluid substream **S138** having parameters as at a point **422.** A flow rate of stream **S138** having the parameters as at the point **422** is equal to a flow rate of stream **S102** having the parameters as at the point **129** (as described above). It should be recognized that the flue gas stream are all the same stream, but with different parameters. It should also be recognized that although a single Heat Recovery Vapor Generator **HRVG** and a single flue gas stream is shown and utilized, the Heat Recovery Vapor Generator **HRVG** can comprise multiple separate Heat Recovery Vapor Generator **HRVG** designed to operate with multiple flue gas stream provided that the overall efficiency gains of the present invention are maintained. It should also be noted that the term super-heated means that the temperature of the stream is the temperature set forth in **Table 2** below or within about 5% of that temperature.

The rich working fluid stream **S138** having the parameters as at the point **422** then passes through an admission valve **TV11** forming a pressure adjusted rich working fluid stream **S140** having parameters as at a point **410.** The stream **S140** having the parameters as at the point **410** then enters into a high pressure turbine **HPT,** where it is expanded to an intermediate pressure forming an intermediate pressure spent rich working fluid stream **S142** having parameters as at a point **412** and generating a first amount of electric power or another useable form of energy. The stream **S142** having the parameters as at the point **412** is then sent to a lower section **HRI** of the Heat Recovery Vapor Generator **HRVG,** where it is cooled in parallel with a fifth flue gas stream **FG18** having parameters as at a point **530** in a fourth **HRVG** heat exchange process **530-506** or **412-413,** forming a cooled intermediate pressure spent rich working fluid stream **S144** having parameters as at a point **413** and a spent flue gas stream **FG20** having parameters as at a point **506.** Heat released in the heat exchange process **412-413** is transferred to the flue gas stream **FG18** having the parameters as at the point **530** and to a lean working fluid stream **S176** having parameters as at a point **203** as described below. The stream **S144** having the parameters as at the point **413** then passes through a low pressure turbine **LPT,** where it is further expanded, producing a second amount of electric power or other useable energy, forming a spent low pressure rich working fluid stream **S146** having parameters as at a point **138.** Thereafter, the spent stream **S146** having the parameters as at the point **138** is sent into the Condensation and Thermal Compression Subsystem **CTCSS**, where it is fully condensed from the first fully condensed rich working fluid stream **S102** having the parameters as at the point **29/129** (as described above).

Meanwhile, the second super-heated vapor rich working fluid stream **S136** having the parameters as at the point **420** (as described above) passes though a control valve **TV10,** forming a second pressure adjusted rich working fluid stream **S148** having parameters as at a point **421.** The stream **S148** having the parameters as at the point **421** is then mixed with a reheated lean working fluid stream **S150** having parameters as at a point **408** (as described below), forming a super-heated intermediate working fluid stream **S152** having parameters as at a point **411.** The term intermediate working fluid as used herein means that the composition of the intermediate working fluid is intermediate between the lean working fluid and the rich working fluid, i.e., the intermediate working fluid stream has a concentration of the lower boiling component of the multi-component working fluid lower than a concentration of the lower boiling component in the rich working fluid and higher than a concentration of the lower boiling component in the lean working fluid stream.

The stream **S152** having the parameters as at the point **411** is then sent into a low concentration turbine **LCT,** where it expands producing a third amount of electric power or other form of useable energy, to form the spent intermediate working fluid stream **S126** having parameters as at the point **316** (as described above). The stream **S126** having the parameters as at the point **316** then passes through the third heat exchanger **HE13,** where it is cooled forming a cooled spent intermediate working fluid stream **S130** having the parameters as at the point **205** providing heat for the third heat exchange process **321-320** (as described above). The stream **S130** having the parameters as at the point **205** corresponds or close to a state of saturated vapor, where the term close has the same meaning as above.

The stream **S130** having the parameters as at the point **205,** which is an intermediate working fluid stream, is then divided into the first intermediate working fluid substream **S116** having the parameters as at the point **206** and a second intermediate working fluid substream **S154** having parameters as at a point **207.** The stream **S116** having the parameters as at the point **206** then passes through the boiler-condenser **HE12,** where it is cooled and partially condensed, releasing heat for the second heat exchange process **101-300** (as described above) forming the stream **S120** having the parameters as at the point **108.** The stream **S120** having the parameters as at the point **108** is then combined with an enrich vapor stream **S156** having parameters as at a point **109** (as described below) forming a mixed stream **S158** having parameters as at a point **110.** The mixed stream **S158** having the parameters as at the point **110** then enters into a gravity separator **S10,** where it is separated into a saturated richer vapor stream **S160** having parameters as a point **111** and a leaner saturated liquid stream **S162** having parameters as at a point **112.** Thereafter, the leaner saturated liquid stream **S162** having the parameters as at the point **112** is divided into a first leaner saturated liquid substream **S164** having parameters as at a point **113** and a second leaner saturated liquid substream **S166** having parameters as at a point **114.**

The leaner liquid substream **S166** having the parameters as at the point **114** is combined with the richer vapor stream **S160** having the parameters as at the point **111** (as described above), forming the rich working fluid stream **S110** having the parameters as at the point **95,** which has a composition equal or very close to the composition of the rich working fluid stream **S104** having the parameters as at the point **100** (as described above), where the term very close means that the parameters of the streams are within 2% of each other. The stream **S110** having the parameters as at the point **95** then passes through the first heat exchanger **HE11,** where it is fully condensed, releasing heat for the first heat exchange process **91-101** (as described above) forming the stream **S114** having the parameters as at the point **98.** The stream **S114** having the parameters as at the point **98** then enters into a second pump **P11**, where its pressure is increased to a pressure equal to a pressure of the stream **S104** having the parameters as at the point **100** (as described above), forming the second fully condensed higher pressure rich working fluid stream **S106** having the parameters as at the point **92.** The stream **S106** having the parameters as at the point **92** is then combined with the stream **S104** having the parameters as at the point **100** forming the rich working fluid stream **S108** having the parameters as at the point **91** (as described above).

Meanwhile, the leaner liquid stream **S164** having the parameters as at the point **113** enters into a third pump **P12,** where its pressure is slightly increased to form a stream **S168** having parameters as at a point **105.** The stream **S168** having the parameters as at the point **105** is then sent to a top of a scrubber **SC2.** As a result of being lifted to the top of the scrubber **SC2,** the stream **S168** obtains parameters as at a point **102,** which corresponds or close to a state of saturated liquid, where the term close is a defined above. The stream **S168** having the parameters as at the point **102** then enters the top of the scrubber **SC2.**

Meanwhile, the second intermediate working fluid substream **S154** having the parameters as at the point **207,** which is in a state of saturated vapor (as described above) enters a lower section of the scrubber **SC2.** As a result of interaction between the stream **S168** having the parameters as at the point **102** and the stream **S154** having the parameters as at the point **207** inside of the scrubber **SC2,** the saturated enriched vapor stream **S156** having the parameters as at the point **109** is produced, and exists from an upper portion of the scrubber **SC2.** At the same time, a very lean saturated liquid stream **S170** with parameters as at a point **103** is produced and exits from a bottom of the scrubber **SC2** (as described below). Meanwhile, the stream **S156** having the parameters as at the point **109** is mixed with the stream **S120** having the parameters as at the point **108** (as described above), forming the stream **S158** having the parameters as at the point **110** (as described above.)

The very lean saturated liquid stream **S170** having the parameters as at point **103** has a very low concentration of the low boiling component. The stream **S170** having the parameters as at the point **103** then enters into a circulating pump **P13,** where its pressure is raised to a pressure equal to a pressure of the rich working fluid substream **S122** having the parameters as at the point **303,** forming a higher pressure very lean liquid stream **S172** having parameters as at a point **201.** The very lean liquid stream **S172** having the parameters as at the point **201** is then combined with the rich working fluid substream **S122** having the parameters as at the point 303 (as described above). Because the stream S172 having the parameters as at the point 201 is verylean, and in a state of subcooled liquid, it fully absorbs the rich substream S122 having the parameters as at the point 303, which is in a state saturated vapor and forms a lean working fluid stream S174 having parameters as at a point 202, which is in a state of saturated or slightly subcooled liquid.

Thereafter, the lean working fluid stream S174 having the parameters as at the point 202 enters into a fourth pump P14, where its pressure is raised to a high, usually super-critical pressure, to form a super-critical lean working fluid stream S176 having parameters as at a point 203. The stream S176 having the parameters as at the point 203 then passes into a lower section HR1 of the Heat Recovery Vapor Generator HRVG, where it is initially heated in counterflow by the fifth flue gas stream FG18 having the parameters as at the point 530 in the fourth HRVG heat exchange process 530-506, to form a heated lean working fluid stream **S178** having parameters as at a point **308** and the spent or sixth flue gas stream **FG20** having the parameters as at the point **506.** The lean working fluid stream **S178** having the parameters as at the point **308** is then further heated, in counterflow with the fourth flue gas stream **FG16** having the parameters as at the point **505** in the third **HRVG** heat exchange process **505-530** in a second or middle section **HR2** of the **HRVG,** to form a hotter lean working fluid stream **S180** having parameters as at a point **304** (the temperature of the stream **S180** at point **304** is equal to the temperature of the stream **S128** at point **309** as described above). The stream **S180** having the parameters as at the point **304** is further heated, in counterflow with the third flue gas stream **FG14** having the parameters as at the point **520** in the first **HRVG** heat exchange process **520-505,** to from a partially vaporized lean working fluid stream **S182** having parameters as at a point **306.** Thereafter, the stream **S182** having the parameters as at the point **306** is further heated, in counterflow by the second flue gas stream **FG12** having the parameters as at the point **500** in the second **HRVG** heat exchange process **500-520,** to form a fully vaporized and super-heated lean working fluid stream **S184** having parameters as at a point **400.** The stream **S184** having the parameters as at the point **400,** which is a lean working fluid stream, then passes through an admission valve **TV12,** to form a pressure adjusted lean working fluid stream **S186** having parameters as at a point **401.** The stream **S186** having the parameters as at the point **401** is then sent into a high pressure turbine **T** where it is expanded, producing a fourth amount of electric power, and forming a spent lean working fluid stream **S188** having parameters as a point **402.** A temperature of the stream **S132** having the parameter as at the point **307** (as described above) is equal to a temperature of the spent lean working fluid stream **S188** having the parameters as at the point **402.** Thereafter, the stream **S188** having the parameters as at the point **402** is returned into an upper section of the Heat Recovery Vapor Generator **HRVG** where it is reheated, in counterflow with the flue gas stream **FG12** having parameters as at the point **500** in the second **HRVG** heat exchange process **500-520,** forming the reheated lean working fluid stream **S150** having the parameters as at the point **408.** The stream **S150** having the parameters as at the point **408** is mixed with the rich working fluid substream **S148** having the parameters as at the point **421,** forming the intermediate working fluid stream **S152** having the parameters as at the point **411** (as described above).

The sixth flue gas stream **FG20** having the parameters as at the point **506** is then divided into a seventh or recycle flue gas stream **FG22** having parameters as at a point **509** and a eighth or waste flue gas stream **FG24** having parameters as at a point **602.** The recycle flue gas stream **FG24** having the parameters as at the point **509** is then passed through a re-circulation fan **F** to form a pressure adjusted recycle flue gas stream **FG26** having parameters as at a point **510,** which is then mixed with a first flue gas stream **FG10** having parameters as at a point **600** to form the second flue gas stream **FG12** having the parameters as at the point **500.** The mixing of the recycle flue gas stream **FG26** and the first flue gas stream **FG10** reduces a temperature of the first flue gas stream **FG10** to a reduced temperature of the second flue gas stream **FG12** to protect the Heat Recovery Vapor Generator **HRVG** from damage from excessive heat. A flow rate of the recycle flue gas stream **FG26** and the initial flue gas stream **FG10** is adjusted to achieve a desired reduced temperature of the second flue gas stream **FG12.**

The working fluid cycle is closed.

### Combustion Gas Subsystem

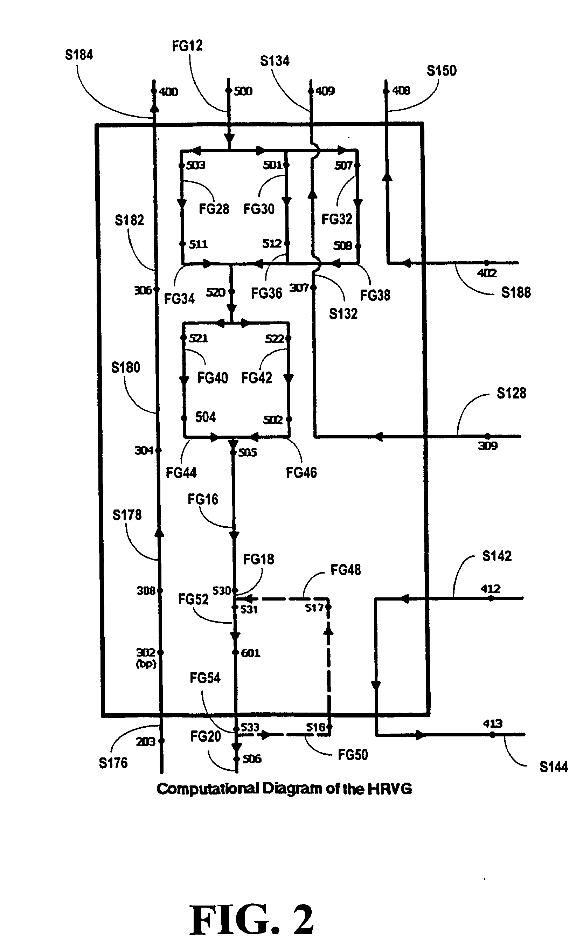

Referring now to **Figure 2****,** a computational diagram of the Heat Recovery Vapor Generator **HRVG** is shown. The second or hot flue gas stream **FG12** having the parameters as the point **500** is shown computational to be divided into a first substreams **FG28** having parameters as at a point **503,** a second substreams **FG30** having parameters as at a point **501,** and a third substreams **FG32** having parameters as at a point **507.** These three streams **FG28, FG30** and **FG32** are cooled to a temperature equal to a temperature of the stream **FG14** having the parameters as at the point **520** when heating the streams **S182, S132,** and **S188** having parameters as at the points **306, 307** and **402** forming corresponding cooled flue gas stream **FG34, FG36** and **FG38** having parameters as at points **511, 512,** and **508,** respectively and the heated stream **S134, S184** and **S50,** respectively. Thus, the stream **FG28** provide heat in the heat exchange process **306-400.** The stream **FG30** provides heat for a heat exchange process **307-409.** The stream **FG32** provides heat for the heat transfer process **402-408.**

Thereafter, the sum total of all three streams **FG34, FG36** and **FG38** is re-designated as the flue gas stream **FG14** having the parameters as at the point **520.** The flue gas stream **FG14** having the parameters as at the point **520,** in turn, is computationally divided into two substreams **FG40** and **FG42** having parameters as at points **521** and **522,** respectively. These streams **FG40** and **FG42** having parameters as at points **521** and **522,** respectively, are cooled to a temperture equal to a temperature of the stream **FG16** having the parameters as at the point **505,** forming further cooled flue gas stream **FG44** and **FG46** having parameters as at points **504** and **502,** respectively. The substream **FG40** provides heat for the heat exchange process **304-306;** while the substream **FG42** provides heat for the heat exchange process **309-307.** Thereafter, the sum total of these two streams **FG44** and **FG46** is re-designated as the stream **FG16** having the parameters as at the point **505.**

Thereafter, the stream **FG16** having the parameter as at the point **505** is further cooled, providing heat for the heat exchange process **308-304,** forming the stream **FG18** having the parameters as at the point **530.** The stream **FG18** having the parameters as at the point **530** is, on the one hand, cooled providing heat for the heat exchange process **203-308,** and on the other hand, is heated by the stream **S142** having the parameter as at the point **412** in the heat exchange process **412-413** (as described above). This counterflow heating of stream **S176** is illustrated in the computation diagram as a flue gas stream **FG48** having parameters as at a point **517** in the heat exchange process **516-517 or 412-413** forming the heated stream **S178** having parameters as at the point **308** and a cooler flue gas stream **FG50** having parameters as at a point **516.** The simultaneous counterflow cooling of the flue gas stream **FG18** having parameters as at the point **530** by the stream **S142** having the parameters as at the point **412** is illustrated in the computational diagram as a flue gas stream **FG52** having parameters as at a point **531** involved in a heat exchange process **531-533** or **412-413** to form a flue gas stream **FG54** and the cooled stream **S144** having parameters as at the point **413.** Thus, the heat exchange process that occur in the lower section **HRI** of the **HRVG** involve heat flowing from both the flue gas stream **FG18** and the **HPT** spent stream **S142** to the intermediate working fluid stream **S176** which is eventually fully vaporized and forwarded to the turbine **T** as a fully vaporized stream **S186** having parameters as at the point **401.** The sum total of these two stream **FG50** and **FG54** make up the spent flue gas stream **FG20** having parameters as at the point **506.**

### Second Embodiment of the System and Method of This Invention

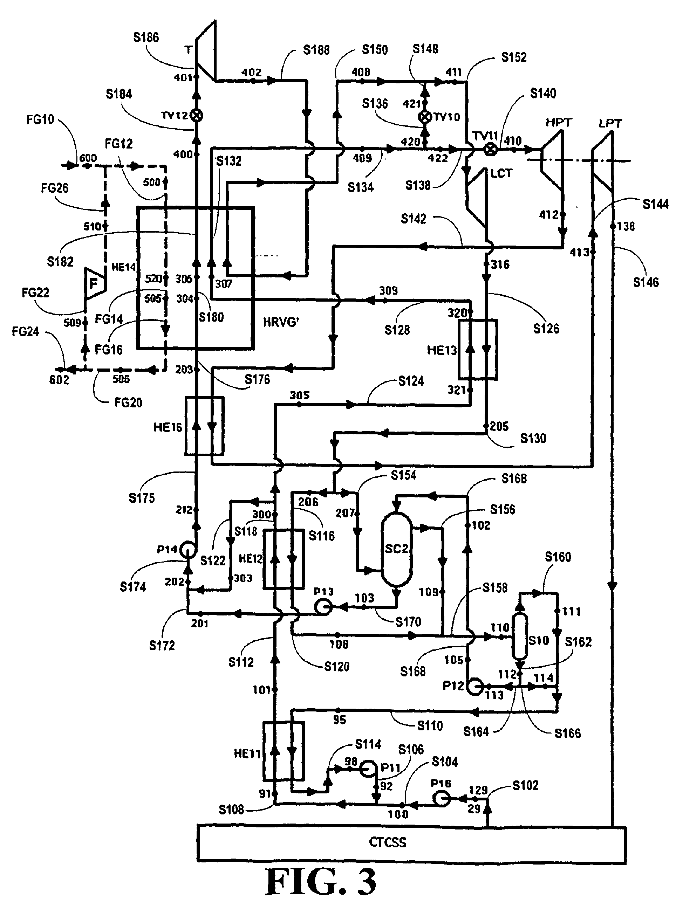

Referring now to **Figure 3****,** an alternate embodiment of the system of this invention, generally **300,** is shown. Although this is a second embodiment, the point and stream designations used in the first embodiment of **Figure 1** are used, when appropriate, in the description of this system **300.** In the system **300,** a first fully condensed rich working fluid stream **S102** having parameters as at a point **29,** where the stream **S102** has a high concentration of a low boiling component of the multi-component working fluid, exits a Condensation and Thermal Compression Subsystem **CTCSS,** where it was fully condensed. The Condensation and Thermal Compression Subsystem **CTCSS** can be a simple condenser, but is generally a more complex subsystem as described below. The stream **S102** having the parameters as at the point **29,** redesignated as a point **129,** is then pumped by a first pump **P16,** to a desired higher pressure, to form a first higher pressure rich working fluid stream **S104** having parameters as at a point **100.** Although the stream **S102** having the parameters at as the point **129** is pressurized to the desired higher pressure in the first pump **P16,** the stream **S102** having the parameters as at the point **29** or **129** exiting the Condensation and Thermal Compression Subsystem **CTCSS** can have the desired higher pressure without the first pump **P16** being located in this part of the system, *i.e*., the first pump **P16** can be located in the **CTCSS.**

The stream **S104** having the parameters as at the point **100** is then mixed with a second higher pressure fully condensed rich working fluid stream **S106** having parameters as at a point **92,** forming a combined rich working fluid stream **S108** having parameters as at a point **91.** The stream **S106** having the parameters as at the point **92** has the same or substantially the same composition and pressure as the stream **S104** having the parameters as at the point **100** (as described below). The term substantially as used here means that the composition and pressure and other parameters of the stream **S106** having the parameters as at the point **92** are within about 5% of the parameters as at the point **100** of the stream **S104.**

The combined stream **S108** having parameters as at a point **91** passes through a first heat exchanger **HE11,** where it is heated in counterflow by a mixed rich working fluid stream **S110** having parameters as at a point **95** in a first heat exchange process **95-98** and **91-101** (as described below) to form a heated combined rich working fluid stream **S112** having parameters as at a **101** and a second fully condensed rich working fluid stream **S114** having parameters as at a point **98.** The heated stream **S112** having the parameters as at the point **101** corresponds to, or corresponds closely to, a state of saturated liquid, where the term closely means that the parameters are within about 5% of a state of saturated liquid. The heated stream **S112** having the parameters as at the point **101** then passes through a boiler-condenser **HE12,** where it is heated and partially vaporized in counterflow by a first intermediate working fluid substream **S116** having parameters as at a point **206** in a second heat exchange process **206-108** and **101-300** (as described below) forming a mixed rich working fluid stream **S118** having parameters as at point **300** and a mixed intermediate working fluid stream **S120** having parameters as at a point **108.** The mixed rich working fluid stream **S118** having the parameters as at the point **300** corresponding to or closely to a state of saturated vapor, where the closely means that the parameters are within about 5% of a state of saturated vapor.

Thereafter, the mixed rich working fluid stream **S118** having the parameters as at the point **300** is split into a first mixed rich working fluid substream **S122** having parameters as at a point **303** and a second mixed rich working fluid substream **S124** having parameters as at a point **305 or 321.** The substream **S124** having the parameters as at the point **305** then passes through a recuperative heat exchanger **HE13,** where it is heated in counterflow by a spent intermediate working fluid stream **S126** having parameters as at a point **316** in a third heat exchange process **316-205** and **305-320 or 321-320** (as described below) forming a vapor rich working fluid stream **S128** having parameters as at a point **320** or **309** (new point designation) and a cooled spent intermediate working fluid stream **S130** having parameters as at a point **205.**

The rich working fluid stream **S128** having the parameters as at the point **309** then enters into a Heat Recovery Vapor Generator **HRVG',** where it is heated in counterflow by a third flue gas stream **FG14** having parameters as at a point **520** in a first **HRVG** heat exchange process **520-505** or **309-307** (as described below) forming a heated stream **S132** having parameters as at a point **307** and a fourth flue gas stream **FG16** having parameters as at a point **505.** The heated rich working fluid stream **S132** having the parameters as at the point **307** is then further heated, in counterflow by a second flue gas stream **FG12** having parameters as at a point **500** in a second **HRVG** heat exchange process **500-520** or **307-409** to form a superheated vapor rich working fluid stream **S134** having parameters as at a point **409** and the third flue gas stream **FG14** having the parameters as at the point **520.** The rich working fluid stream **S134** having the parameters as at the point **409** is then split into a first vapor rich working fluid substream **S136** having parameters as at a point **420** and a second vapor rich working fluid substream **S138** having parameters as at a point **422.** A flow rate of stream **S138** having the parameters as at the point **422** is equal to a flow rate of stream **S102** having the parameters as at the point **129** (as described above).

The stream **S138** having the parameters as at the point **422** then passes through an admission valve **TV11** forming a pressure adjusted rich working fluid stream **S140** having parameters as at a point **410.** The stream **S140** having the parameters as at the point **410** then enters into a high pressure turbine **HPT,** where it is expanded to an intermediate pressure forming a spent intermediate pressure rich working fluid stream **S142** having parameters as at a point **412** and generating a first amount of electric power or other useable form of energy. The spent intermediate pressure rich working fluid stream **S142** having the parameters as at the point **412** is then passed through an additional heat exchanger **HE16,** where it is used to heat a higher pressure lean working fluid stream **S175** having parameters as at a point **212** in a heat exchange process **412-413** or **212-203** to form a heated higher pressure lean working fluid stream **S176** having parameters as at a point **203** and a cooled pent intermediate pressure rich working fluid stream **S144** having parameters as at a point **413.** The stream **S144** having the parameters as at the point **413** then passes through a low pressure turbine **LPT,** where it is further expanded, producing a second amount of electric power or other useable energy, forming a spent rich working fluid stream **S146** having parameters as at a point **138.** Thereafter, the spent rich working fluid stream **S146** having the parameters as at the point **138** is sent into the Condensation and Thermal Compression Subsystem **CTCSS,** where it is condensed to form the first fully condensed rich working fluid stream **S102** having parameters as at the point **29** or **129.**

Meanwhile, the second rich working fluid substream **S136** having the parameters as at the point **420** (as described above) passes though a control valve **TV10,** forming a second pressure adjusted rich working fluid stream **S148** having parameters as at a point **421.** The stream **S148** having the parameters as at the point **421** is then mixed with a reheated lean working fluid stream **S150** having parameters as at a point **408** (as described below), forming a super-heated intermediate working fluid stream **S152** having parameters as at a point **411.** The stream **S152** having the parameters as at the point **411** is then sent into a low concentration turbine **LCT,** where it expands producing a third amount of electric power or other form of useable energy, to form the spent intermediate working fluid stream **S126** having parameters as at a point **316.** The stream **S126** having the parameters as at the point **316** then passes through the third heat exchanger **HE13,** where it is cooled forming the stream **S130** having the parameters as at the point **205** providing heat for the third heat exchange process **321-320** (as described above). The stream **S130** having the parameters as at the point **205** corresponds or close to a state of saturated vapor, where the term close has the same meaning as above.

The stream **S130** having the parameters as at the point **205,** which is an intermediate working fluid stream, is then divided into the first intermediate working fluid substream **S116** having the parameters as at the point **206** and a second intermediate working fluid substream **S154** having parameters as at a point **207.** The first intermediate working fluid substream **S116** having the parameters as at the point **206** then passes through the boiler-condenser **HE12,** where it is cooled and partially condensed, releasing heat for the second heat exchange process **101-300** (as described above) forming the stream **S120** having the parameters as at the point **108.** The stream **S120** having the parameters as at the point **108** is then combined with a stream **S156** having parameters as at a point **109** (as described below) forming a stream **S158** having parameters as at a point **110.** The stream **S158** having the parameters as at the point **110** then enters into a gravity separator **S10,** where it is separated into a saturated vapor stream **S160** having parameters as a point **111** and a saturated liquid stream **S162** having parameters as at a point **112.** Thereafter, the saturated liquid stream **S162** having the parameters as at the point **112** is divided into a first saturated liquid substream **S164** having parameters as at a point **113** and a second saturated liquid substream **S166** having parameters as at a point **114.**

The substream **S166** having the parameters as at the point **114** is combined with the vapor stream S160 having the parameters as at the point **111** (as described above), forming the stream **S110** having the parameters as at the point **95,** which has a composition equal or very close to the composition of the rich working fluid stream **S104** having the parameters as at the point **100** (as described above), where the term very close means that the parameters of the streams are within 2% of each other. The stream **S110** having the parameters as at the point **95** then passes through the first heat exchanger **HE11**, where it is fully condensed, releasing heat for the first heat exchange process **91-101** (as described above) forming the stream **S114** having the parameters as at the point **98.** The stream **S114** having the parameters as at the point **98** then enters into a second pump **P11**, where its pressure is increased to a pressure equal to a pressure of the stream **S104** having the parameters as at the point **100** (as described above), forming the stream **S106** having the parameters as at the point **92.** The stream **S106** having the parameters as at the point **92** is then combined with the stream **S104** having the parameters as at the point **100** forming the stream **S108** having the parameters as at the point **91** (as described above).

Meanwhile, the stream **S164** having the parameters as at the point **113** enters into a third pump **P12,** where its pressure is slightly increased to form a stream **S168** having parameters as at a point **105.** The stream **S168** having the parameters as at the point **105** is then sent to a top of a scrubber **SC2.** As a result of being lifted to the top of the scrubber **SC2,** the stream **S168** obtains parameters as at a point **102,** which corresponds or close to a state of saturated liquid, where the term close is as defined above. The stream **S168** having the parameters as at the point **102** then enters the top of the scrubber **SC2.**

Meanwhile, the stream **S154** having the parameters as at the point **207,** which is in a state of saturated vapor (as described above) enters a lower section of the scrubber **SC2.** As a result of interaction between the stream **S168** having the parameters as at the point **102** and the stream **S154** having the parameters as at the point **207** inside of the scrubber **SC2,** the saturated vapor stream **S156** having the parameters as at the point **109** is produced, and exists from an upper portion of the scrubber **SC2.** At the same time, a saturated liquid stream **S170** with parameters as at a point **103** is produced and exits from a bottom of the scrubber **SC2** (as described below). Meanwhile, the stream **S156** having the parameters as at the point **109** is then mixed with the stream **S120** having the parameters as at the point **108** (as described above), forming the stream **S158** having the parameters as at the point **110** (as described above.)

The saturated liquid stream **S170** having the parameters as at point **103** has a very low concentration of the low boiling component, *i.e*., the stream **S170** is very lean. The stream **S170** having the parameters as at the point **103** then enters into a circulating pump **P13,** where its pressure is raised to a pressure equal to a pressure of the stream **S122** having the parameters as at the point **303,** forming a higher pressure stream **S172** having parameters as at a point **201.** The stream **S172** having the parameters as at the point **201** is then combined with the stream **S122** having the parameters as at the point **303** (as described above). Because the stream **S172** having the parameters as at the point **201** is lean, and in a state of subcooled liquid, it fully absorbs the stream **S122** having the parameters as at the point **303,** which is in a state saturated vapor, forming a lean working fluid stream **S174** having parameters as at a point **202,** which is in a state of saturated or slightly subcooled liquid.

Thereafter, the stream **S174** having the parameters as at the point **202** enters into a fourth pump **P14,** where its pressure is raised to a high, usually super-critical pressure, to form a super-critical stream **S175** having parameters as at a point **202.** The stream **S175** having the parameters as at the point **202** then passes through the additional heat exchanger HE16 in counterflow with the HPT spent stream S142 having the parameters as at the point 412, where it is heated by the stream S142 to form a heated, super-critical stream **S176** having parameters as at a point **203,** which is then sent into a bottom of the Heat Recovery Vapor Generator **HRVG.** The heated, super-critical stream S176 having the parameters as at the point 203 is initially heated in counterflow by a fourth flue gas stream **FG16** having the parameters as at the point **505** in the second **HRVG** heat exchange process **505-506,** to form a hotter, super-critical lean working fluid stream **S180** having parameters as at a point **304** (the temperature of the stream **S180** at point **304** is equal to the temperature of the stream **S128** at point **309** as described above). The stream **S180** having the parameters as at the point **304** is further heated, in counterflow with the third flue gas stream **FG14** having the parameters as at the point **520** in the first **HRVG** heat exchange process **520-505,** to from a partially vaporized lean working fluid stream **S182** having parameters as at a point **306.** Thereafter, the stream **S182** having the parameters as at the point **306** is further heated, in counterflow by the second flue gas stream **FG12** having the parameters as at the point **500** in the second **HRVG** heat exchange process **500-520,** to form a fully vaporized lean working fluid stream **S184** having parameters as at a point **400.** The stream **S184** having the parameters as at the point **400,** which is a lean working fluid stream, then passes through an admission valve **TV12,** to form a pressure adjusted lean working fluid stream **S186** having parameters as at a point **401.** The stream **S186** having the parameters as at the point **401** is then sent into a high pressure turbine **T** where it is expanded, producing a fourth amount of electric power, and forming a spent lean working fluid stream **S188** having parameters as a point **402.** A temperature of the stream **S132** having the parameter as at the point **307** (as described above) is equal to a temperature of the spent lean working fluid stream **S188** having the parameters as at the point **402.** Thereafter, the stream **S188** having the parameters as at the point **402** is returned into an upper section of the Heat Recovery Vapor Generator **HRVG** where it is reheated, in counterflow with the flue gas stream **FG12** having parameters as at the point **500** in the second **HRVG** heat exchange process **500-520,** forming the stream **S150** having the parameters as at the point **408.** The stream **S150** having the parameters as at the point **408** is mixed with the stream **S148** having the parameters as at the point **421,** which is a rich solution stream, forming the intermediate solution stream **S152** having the parameters as at the point **411** (as described above).

The fifth flue gas stream **FG20** having the parameters as at the point **506** is then divided into a sixth or recycle flue gas stream **FG22** having parameters as at a point **509** and a seventh or waste flue gas stream **FG24** having parameters as at a point **602.** The recycle flue gas stream **FG24** having the parameters as at the point **509** is then passed through a re-circulation fan **F** to form a pressure adjusted recycle flue gas stream **FG26** having parameters as at a point **510,** which is then mixed with a first flue gas stream **FG10** having parameters as at a point **600** to form the second flue gas stream **FG12** having the parameters as at the point **500.** The mixing of the recycle flue gas stream **FG26** and the first flue gas stream **FG10** reduces a temperature of the first flue gas stream **FG10** to a reduced temperature of the second flue gas stream **FG12** to protect the Heat Recovery Vapor Generator **HRVG** from damage from excessive heat. A flow rate of the recycle flue gas stream **FG26** and the initial flue gas stream **FG10** is adjusted to achieve a desired reduced temperature of the second flue gas stream **FG12.**

The working fluid cycle is closed.

### CTCSS

### CTCSS Variant 1a

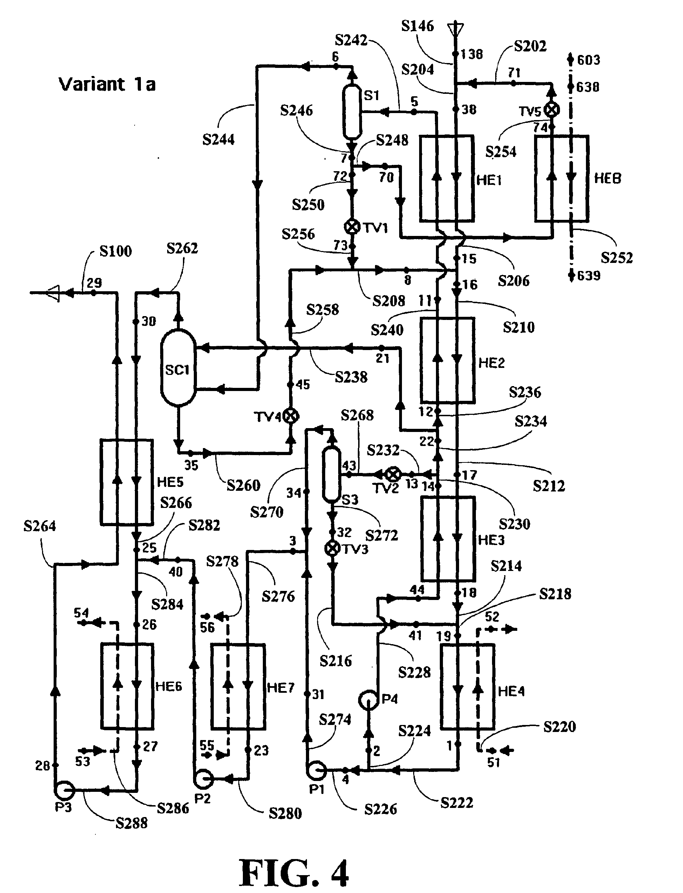

Referring now to **Figure 4****,** a preferred embodiment of a CTCSS of this invention, generally **188,** is shown and is referred to herein as **CTCSS Variant 1a. CTCSS Variant 1a** represents a very comprehensive variant of the CTCSSs of this invention.

The operation of **CTCSS Variant 1a** is now described.

The stream **S146** having parameters as at a point **138,** which can be in a state of superheated vapor or in a state of saturated or slightly wet vapor, enters into the **CTCSS 200.** The stream **S146** having the parameters as at the point **138** is mixed with a first mixed stream **S202** having parameters as at a point **71**, which is in a state of a liquid-vapor mixture (as describe more fully herein), forming a first combined stream **S204** having parameters as at a point **38.** If the stream **S146** having the parameters as at the point **138** is in a state of saturated vapor, then a temperature of the stream **S202** having the parameters as at the point **71** must be chosen in such a way as to correspond to a state of saturated vapor. As a result, the stream **S204** having the parameters as at the point **38** will be in a state of a slightly wet vapor. Alternatively, if the stream **S146** having the parameters as at the point **138** is in a state of superheated vapor, then stream **S202** having the parameters of at the point **71** must be chosen in such a way that the resulting stream **S204** having the parameters as at a point **38** should be in, or close to, a state of saturated vapor, where close to means the state of the vapor is within 5% of the saturated vapor state for the vapor. In all cases, the parameters of the stream **S202** at the point **71** are chosen in such a way as to maximize a temperature of the stream **S204** at the point **38.**

Thereafter, the stream **S204** having the parameters as at the point **38** passes through a first heat exchanger **HE1**, where it is cooled and partially condensed and releases heat in a first heat exchange process, producing a second mixed stream **S206** having parameters as at a point **15.** The stream **S206** having the parameters as at the point **15** is then mixed with a stream **S208** having parameters as at a point **8,** forming a stream **S210** having parameters as at a point **16.** In the preferred embodiment of this system, the temperatures of the streams **S208, S206** and **S210** having parameters of the points **8, 15,** and **16,** respectively, are equal or very close, within about 5%. A concentration of the low-boiling component in stream **S208** having the parameters as at the point **8** is substantially lower than a concentration of the low boiling component in the stream **S206** having the parameters as at the point **15.** As a result, a concentration of the low boiling component in the stream **S210** having the parameters as at the point **16** is lower than the concentration of the low boiling component of the stream **S206** having the parameters as at the point **15,** *i.e*., stream **S210** having the parameters as at the point **16** is leaner than stream **S206** having the parameters as at the point **15.**

The stream **S210** having the parameters as at the point **16** then passes through a second heat exchanger **HE2,** where it is further condensed and releasing heat in a second heat exchange process, forming a stream **S212** having parameters as at a point **17.** The stream **S212** having the parameters as at the point **17** then passes through a third heat exchanger **HE3,** where it is further condensed in a third heat exchange process to form a stream **S214** having parameters as at a point **18.** At the point **18,** the stream **S214** is partially condensed, but its composition, while substantially leaner that the compositions of the stream **S146** and **S204** having the parameters as at the points **138** and **38,** is such that it cannot be fully condensed at ambient temperature. The stream **S214** having the parameters as at the point **18** is then mixed with a stream **S216** having parameters as at a point **41,** forming a stream **S218** having parameters as at a point **19.** The composition of the stream **S218** having the parameters as at the point **19** is such that it can be fully condensed at ambient temperature.

The stream **S218** having the parameters as at the point **19** then passes through a low pressure condenser **HE4,** where it is cooled in a fourth heat exchange process in counterflow with a stream **S220** of cooling water or cooling air having initial parameters as at a point **51** and final parameters as at a point **52,** becoming fully condensed, to form a stream **S222** having parameters as at a point **1.** The composition of the stream **S222** having the parameters as at the point **1,** referred to herein as the "basic solution," is substantially leaner than the composition of the stream **S146** having the parameters at the point **138,** which entered the **CTCSS 100.** Therefore, the stream **S222** having the parameters as at the point **1** must be distilled at an elevated pressure in order to produce a stream **S146** having the same composition as at point **138,** but at an elevated pressure that will allow the stream to fully condense.

The stream **S222** having the parameters as at the point 1 is then divided into two substreams S224 and S226 having parameters as at points 2 and 4, respectively. The stream S224 having the parameters as at the point 2 enters into a circulating fourth pump P4, where it is pumped to an elevated pressure forming a stream S228 having parameters as at a point 44, which correspond to a state of subcooled liquid. Thereafter, the stream S228 having the parameters as at the point 44 passes through a third heat exchanger HE3 in counterflow with the stream S212 having the parameters as at the point 17 in a third heat exchange process as described above, is heated forming a stream S230 having parameters as at a point 14. The stream S230 having the parameters as at the point 14 is in, or close to, a state of saturated liquid. Again, the term close to means that the state of the stream **S230** is within 5% of being a saturated liquid. Thereafter, the stream S230 having parameters as at point 14 is divided into two substreams S232 and S234 having parameters as at points **13** and **22,** respectively. The stream **S234** having the parameters as at the point **22** is then divided into two substreams **S236** and **S238** having parameters as at points **12** and **21,** respectively. The stream **S236** having the parameters as at the point **12** then passes through the second heat exchanger **HE2,** where it is heated and partially vaporized in counterflow to the stream **S200** having the parameters as at the point **16** as described above in a second heat exchange process, forming a stream **S240** having parameters as at a point **11.** The stream **S240** having the parameters as at the point **11** then passes through the first heat exchanger **HE1,** where it is further heated and vaporized in counterflow to the stream **S204** having stream **38** as described above in a first heat exchange process, forming a stream **S242** having parameters as at a point **5.**

The stream **S242** having the parameters as at the point **5,** which is in a state of a vapor-liquid mixture, enters into a first separator **S1**, where it is separated into a saturated vapor stream **S244** having parameters as at a point **6** and saturated liquid stream **S246** having parameters as at a point **7.**

The liquid stream **S246** having the parameters as at the point **7** is divided into two substreams **S248** and **S250** having parameters as at points **70** and **72,** respectively. The stream **S248** having the parameters as at the point **70,** then passes through an eighth heat exchanger **HE8,** where it is heated and partially vaporized in an eighth heat exchange process, in counterflow to an external heat carrier stream **S252** having initial parameters as a point **638** and final parameters as at a pint **639,** forming a stream **S254** having parameters as at a point **74.** Thereafter, stream **S254** having the parameters as at the point **74** passes through a fifth throttle valve **TV5,** where its pressure is reduced to a pressure equal to a pressure of the stream **S146** having the parameters as at the point **138,** forming the stream **S202** having the parameters as at the point **71.** Thereafter, the stream **S202** having the parameters as at the point **71** is mixed with the stream **S146** having the parameters as at the point **138,** forming the stream **S204** having the parameters as at the point **38** as previously described.

The stream **S250** having parameters as at point **72,** then passes through a first throttle valve **TV1**, where its pressure is reduced, forming a stream **S256** having parameters as at a point **73.** The pressure of the stream **S256** having the parameters as at the point **73** is equal to a pressure of the streams **S206, S208,** and **S210** having the parameters as at the points **15, 8** and **16.** Thereafter the stream **S256** having the parameters as at the point **73** is mixed with a stream **S258** having parameters as at a point **45,** forming the stream **S208** having the parameters as at the point **8.** The stream **S208** having the parameters as a the point **8** is then mixed with the stream **S206** having the parameters as at the point **15,** forming the stream **S210** having the parameters as at the point **16** as described above.

Meanwhile, the vapor stream **S244** having the parameters as at the point **6** is sent into a bottom part of a first scrubber **SC1**, which is in essence a direct contact heat and mass exchanger. At the same time, the stream **S238** having the parameters as at the point **21** as described above, is sent into a top portion of the first scrubber **SC1.** As a result of heat and mass transfer in the first scrubber **SC1,** a liquid stream **S260** having parameters as at a point **35,** which is in a state close to equilibrium (close means within about 5% of the parameters of the stream **S244)** with the vapor stream **S244** having the parameters as at the point **6,** is produced and removed from a bottom of the first scrubber **SC1.** At the same time, a vapor stream **S262** having parameters as at point **30,** which is in a state close to equilibrium with the liquid stream **S238** having the parameters as at the point **21,** exits from a top of the scrubber **SC1.**

The vapor stream **S262** having the parameters as at the point **30** is then sent into a fifth heat exchanger **HE5,** where it is cooled and partially condensed, in counterflow with a stream **S264** of working fluid having parameters as at a point **28** in a fifth heat exchange process, forming a stream **S266** having parameters as at a point **25.**

The liquid stream **S260** having the parameters as at the point **35** is removed from the bottom of the scrubber **SC1** and is sent through a fourth throttle valve **TV4,** where its pressure is reduced to a pressure equal to the pressure of the stream **S256** having the parameters as at the point **73,** forming the stream **S258** having the parameters as at the point **45.** The stream **S258** having the parameters as at the point **45** is then mixed with the stream **S256** having the parameters as at the point **73,** forming the stream **S208** having the parameters as at the point **8** as described above.

The liquid stream **S232** having the parameters as at the point **13,** which has been preheated in the third heat exchanger **HE3** as described above, passes through a second throttle valve **TV2,** where its pressure is reduced to an intermediate pressure, (*i.e*., a pressure which is lower than the pressure of the stream **S230** having the parameter as at the point **14,** but higher than the pressure of the stream **S222** having the parameters as at the point 1), forming a stream **S268** parameters as at a point **43,** corresponding to a state of a vapor-liquid mixture. Thereafter, the stream **S268** having the parameters as at the point **43** is sent into a third separator **S3,** where it is separated into a vapor stream **S270** having parameters as at a point **34** and a liquid stream **S272** having parameters as at a point **32.**

A concentration of the low boiling component in the vapor stream **S270 having** the parameters as at the point **34** is substantially higher than a concentration of the low boiling component in the stream **S146** having the parameters as at the point **138** as it enters the CTCSS **200** as described above. The liquid stream **S272** having the parameters as at the point **32** has a concentration of low boiling component which is less than a concentration of low boiling component in the stream **S222** having the parameters as at the point **1** as described above.

The liquid stream **S226** of the basic solution having the parameters as at the point **4** as described above, enters into a first circulating pump **P1**, where it is pumped to a pressure equal to the pressure of the stream **S270** having the parameters as at the point **34,** forming a stream **S274** having parameters as at a point **31** corresponding to a state of subcooled liquid. Thereafter, the subcooled liquid stream **S274** having the parameters as at the point **31** and the saturated vapor stream **S270** having the parameters as at the point **34** are combined, forming a stream **S276** having parameters as at a point **3.** The stream **S276** having the parameters as at the point **3** is then sent into an intermediate pressure condenser or a seventh heat exchanger **HE7,** where it is cooled and fully condensed in a seventh heat exchange process, in counterflow with a stream **S278** of cooling water or air having initial parameters as at a point **55** and having final parameters as at a point **56,** forming a stream **S280** having parameters as at a point **23.** The stream **S280** having parameters as at point **23** then enters into a second circulating pump **P2,** where its pressure is increased to a pressure equal to that of the stream **S266** having the parameters as at the point **25** as described above, forming a stream **S282** parameters as at a point **40.** The stream **S282** having the parameters as at the point **40** is then mixed with the stream **S266** having the parameters as at the point **25** as described above, forming a stream **S284** having parameters as at a point **26.** The composition and flow rate of the stream **S282** having the parameters as at the point **40** are such that the stream **S284** having the parameters as at the point **26** has the same composition and flow rate as the stream **S146** having the parameters as at the point **138,** which entered the **CTCSS 200,** but has a substantially higher pressure.

Thereafter, the stream **S284** having the parameters as at the point **26** enters into a high pressure condenser or sixth heat exchanger **HE6,** where it is cooled and fully condensed in a sixth heat exchange process, in counterflow with a stream **S286** of cooling water or air having initial parameters as at a point **53** and final parameters as at a point **54,** forming a steam **S288** parameters as at a point **27,** corresponding to a state of saturated liquid. The stream **S288** having the parameters as at the point **27** then enters into a third or feed pump **P3,** where it is pumped to a desired high pressure, forming the stream **S264** having the parameters as at the point **28.** Then the stream **S264** of working fluid having the parameters as at the point **28** is sent through the fifth heat exchanger **HE5,** where it is heated, in counterflow with the stream **S262** having the parameters as at the point **30** in the fifth heat exchange process, forming a stream **S100** having parameters as at a point **29** as described above. The stream **S290** having the parameters as at a point **29** then exits the **CTCSS 200,** and returns to the power system. This **CTCSS** of this invention is closed in that no material is added to any stream in the **CTCSS.**

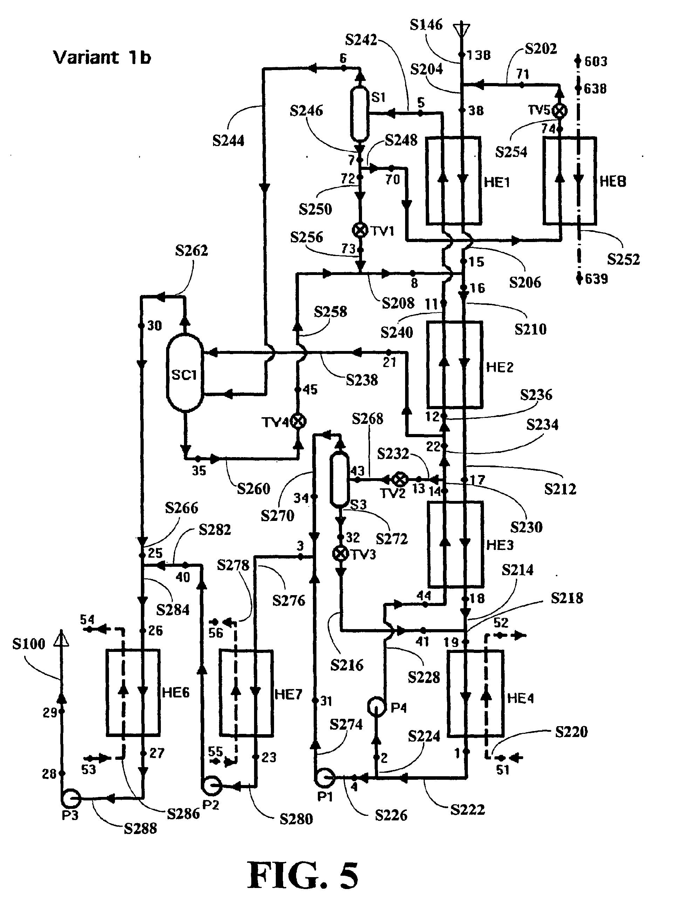

In some cases, preheating of the working fluid which is reproduced in the **CTCSS** is not necessary. In such cases, the fifth heat exchanger **HE5** is excluded from the **CTCSS Variant 1a** described above. As a result, the stream **S262** having the parameters as at the point **30** and the stream **S266** having the parameters as at the point **25** are the same, and the stream **S264** having the parameters at the point **28** are the stream **S100** having the parameters as at the point **29** are the same as shown in **Figure 5****.** The **CTCSS** system in which **HE5** is excluded is referred to as **CTCSS Variant 1b**.

The **CTCSSs** of this invention provide highly effective utilization of heat available from the condensing stream **S146** of the working solution having the parameters as at the point **138** and of heat from external sources such as from the stream **S252.**

In distinction from an analogous system described in the prior art, the lean liquid stream **S246** having the parameters as at the point **7** coming from the first separator **S1**, is not cooled in a separate heat exchanger, but rather a portion of the stream **S246** is injected into the stream **S200** of working fluid returning from the power system.

When the stream **S236** of basic solution having the parameters as at the point **12** starts to boil, it initially requires a substantial quantity of heat, while at the same time its rise in temperature is relatively slow. This portion of the reboiling process occurs in the second heat exchanger **HE2.** In the process of further reboiling, the rate of increase in the temperatures becomes much faster. This further portion of the reboiling process occurs in the first heat exchanger **HE1.** At the same time, in the process of condensation of the stream **S204** having the parameters as at the point **38,** initially a relatively large quantity of heat is released, with a relatively slow reduction of temperature. But in further condensation, the rate of reduction of temperature is much higher. As a result of this phenomenon, in the prior art, the temperature differences between the condensing stream of working solution and the reboiling stream of basic solution are minimal at the beginning and end of the process, but are quite large in the middle of the process.

In contrast to the prior art, in the **CTCSS** of this invention, the concentration of the low boiling component in stream **S208** having the parameters as at the point **8** is relatively low and therefore in the second heat exchanger **HE2,** stream **S208** having the parameters as at the point **8** not only condenses itself, but has the ability to absorb additional vapor. As a result, the quantity of heat released in the second heat exchanger **HE2** in the second heat exchange process is substantially larger than it would be if streams **S208** and **S206** having the parameters as at the points **8** and **15,** respectively, were cooled separately and not collectively collect after combining the two stream **S208** and **S206** to form the stream **S210.** As a result, the quantity of heat available for the reboiling process comprising the first and second heat exchange processes is substantially increased, which in turn increases the efficiency of the **CTCSS** system.

The leaner the stream **S208** having the parameters at as the point **8** is, the greater its ability to absorb vapor, and the greater the efficiency of the heat exchange processes occurring in the first and second heat exchangers **HE1** and **HE2.** But the composition of the stream **S208** having the parameters at as the point **8** is defined by the temperature of the stream **S242** having the parameters as at the point **5;** the higher the temperature of the stream **S242** having the parameters as at the point **5,** the leaner the composition of stream **S208** having the parameters at as the point **8** can be.

It is for this reason that external heat derived from stream **S252** is used to heat stream **S248** having the parameters as at the point **70,** thus raising the temperature of the stream **S204** having the parameters as at the point **38,** and as a result also raising the temperature of the stream **S242** having the parameters as at the point **5.** However, increasing of the temperature of the stream **S242** having the parameters as at the point **5,** and correspondingly the temperature of the stream **S244** having the parameters as at a point **6,** leads to a reduction in a concentration of the low boiling component in the vapor stream **S244** having the parameters as at the point **6.**

Use of the scrubber **SC1,** in place of a heat exchanger, for the utilization of heat from the stream **S244** having the parameters as at the point **6** allows both the utilization of the heat from the stream **S244** having the parameters as at the point **6** and an increase of the concentration of low boiling component in the produced vapor stream **S262** having the parameters as at the point **30.**

The vapor stream **S262** having the parameters as at the point **30** has a concentration of low-boiling component which is higher than the concentration of the low boiling component in the vapor stream **S244** having the parameters as at the point **6,** and the flow rate of stream **S262** having the parameters as at the point **30** is higher than the flow rate of the stream **S244** having the parameters as at the point **6.**

The concentration of low boiling component in the working fluid is restored in the stream **S284** having the parameters at the point **26,** by mixing the stream **S266,** a very rich solution, having the parameters as at the point **25** (or the stream **S262** having the parameters as at the point **30,** in the case of the **CTCSS Variant 1b),** with the stream **S282** having the parameters as at the point **40.** The stream **S282** having the parameters as at point **40** has a higher concentration of low boiling component than the basic solution, (*i.e*., is enriched). Such an enrichment has been used in the prior art, but in the prior art, in order to obtain this enrichment, a special intermediate pressure reboiling process is needed requiring several additional heat exchangers.

In the **CTCSSs** of this invention, all heat that is available at a temperature below the boiling point of the basic solution (*i.e*., below the temperature of the stream **S230** having the parameters as at the point **14)** is utilized in a single heat exchanger, the third heat exchanger **HE3.** Thereafter, the vapor needed to produce the enriched stream **S282** having the parameters as at the point **40** is obtained simply by throttling the stream **S232** having the parameters as at the point **13.**

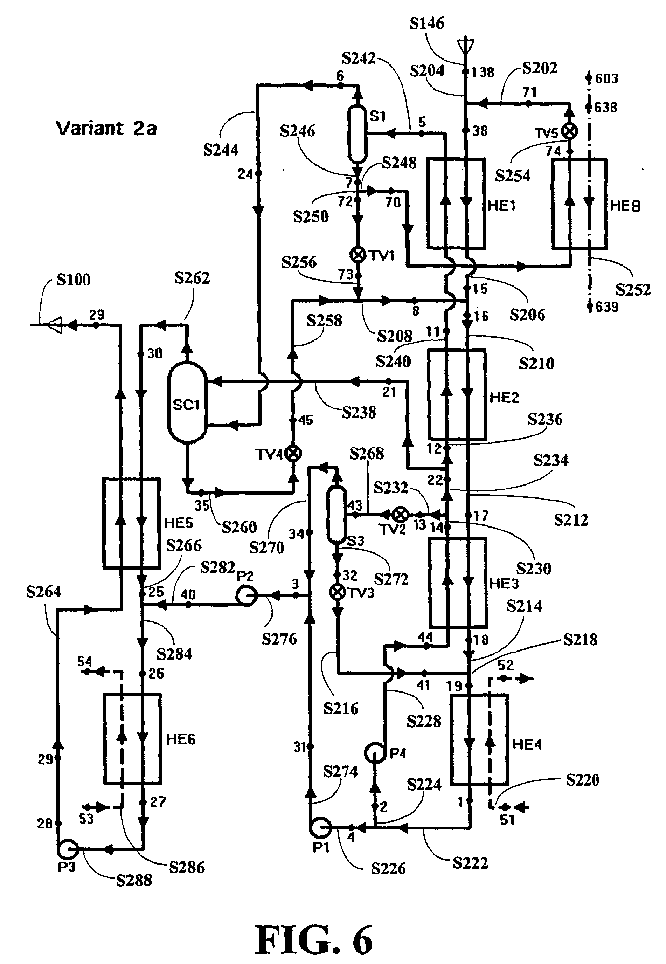

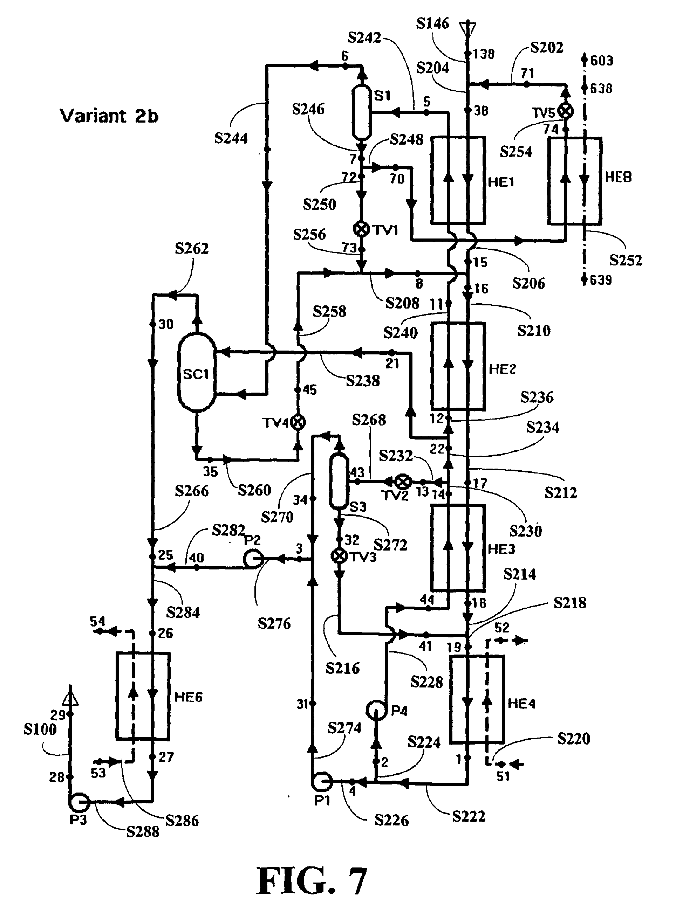

The **CTCSSs** of this invention can be simplified by eliminating some "modular" components. For instance, it is possible to enrich the stream **S282** having the parameters as at the point **40** without using the intermediate pressure condenser, the seventh heat exchanger **HE7.** Such a system, with preheating of the stream **S264** of working fluid having the parameters as at the point **28** is shown in **Figure 6****,** and referred to as **CTCSS Variant 2a.** A similar system, but without preheating the stream **S264** of working fluid having the parameters as at the point **28,** is shown in **Figure 7****,** and referred to as **CTCSS Variant 2b.**

In the **CTCSS Variant 2a** and **CTCSS Variant 2b,** in distinction to the **CTCSS Variant 1a** and **CTCSS Variant 1b**, the pressure of the stream **S268** having the parameters as at the point **43** is chosen in such a way that the when mixing the vapor stream **S270** having the parameters as at the point **34** and the liquid stream **S274** having the parameters as at the point **31,** the subcooled liquid stream **S274** having the parameters as at the point **31** fully absorbs the vapor stream **S270** having the parameters as at the point **34,** and the resulting stream **S276** having the parameters as at the point **3** is in a state of saturated, or slightly subcooled, liquid. Thereafter, the liquid **S276** having the parameters as at the point 3 is sent into the second pump **P2,** to form the stream **S282** having the parameters as at the point **40,** and is mixed with stream **25.**

The simplification of the **CTCSS** of **CTCSS Variant 2a** and **CTCSS Variant 2b** reduces the overall efficiency of the **CTCSSs** of this invention, but at the same time, the cost is also reduced.

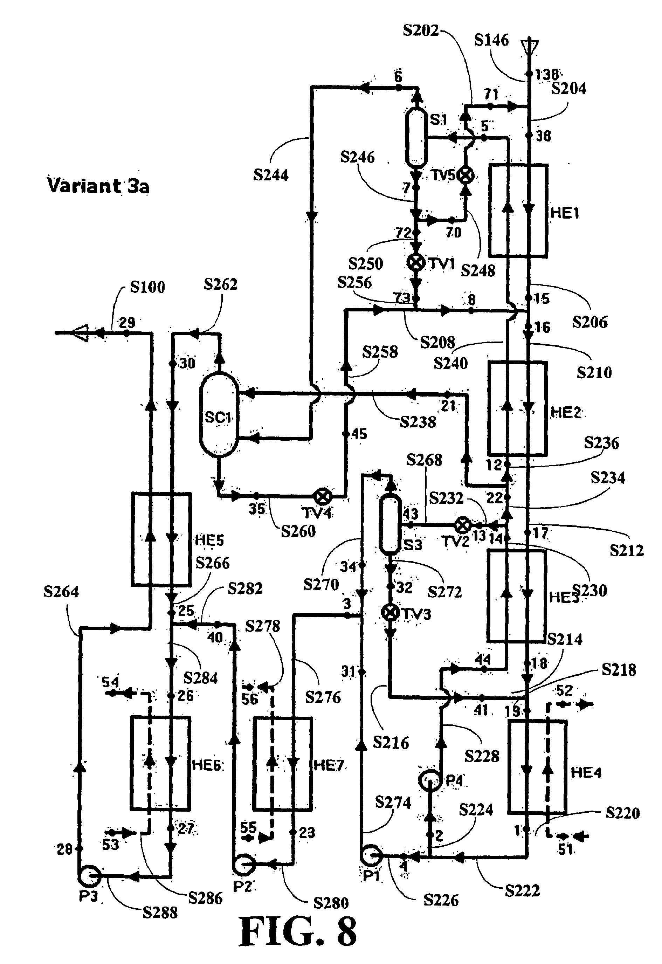

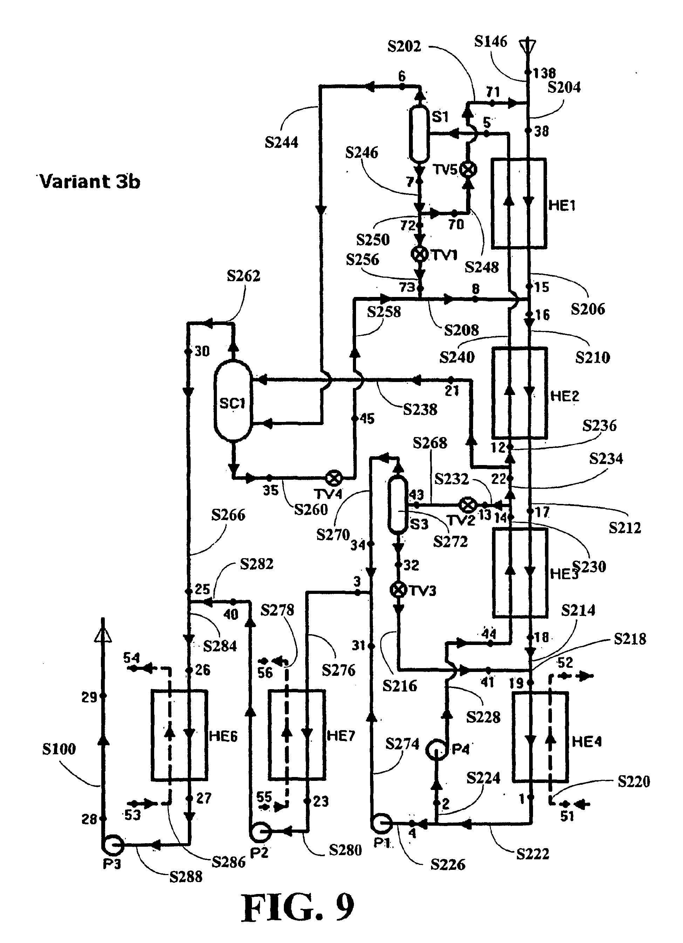

Another possible modular simplification of the **CTCSS Variant 1a** and **CTCSS Variant 1b** can be used in a case where external heat is not available, or the choice is made not to utilize external heat. Such a variant of the **CTCSS** of this invention, with preheating of the stream **S264** of working fluid having the parameters as at the point **28** is shown in **Figure 8****,** and is referred to as **CTCSS Variant 3a.** A similar **CTCSS** of this invention, but without preheating the stream **S264** of the working fluid having the parameters as at the point **28,** is shown in **Figure 9****,** and referred to as **CTCSS Variant 3b.**

In **CTCSS Variant 3a** and **CTCSS Variant 3b,** the stream **S248** having the parameters as at the point **70** is not heated, but rather simply passes through the fifth throttle valve **TV5,** to form the stream **S202** having the parameters as at the point **71,** and is then mixed with the stream **S146** having the parameters as at the point **138,** forming the stream **S204** having the parameters as at the point **38.** This mixing process is used only in a case where the stream **S146** having the parameters as at the point **138** is in a state of superheated vapor. The flow rate of streams **S248** and **S202** having the parameters as at the points **70** and **71** is chosen in such a way that the stream **S204** having the parameters as at the point **38** formed as a result of mixing the stream **S202** having the parameters as at the point **71** and the stream **S146** having the parameters as at the point **138** is in a state of saturated, or slightly wet, vapor.

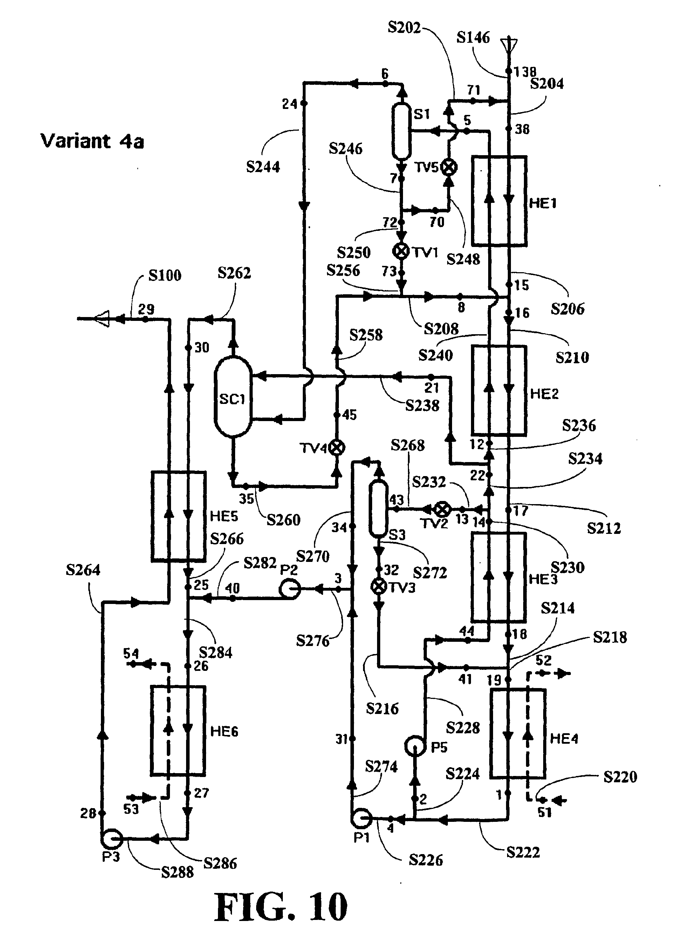

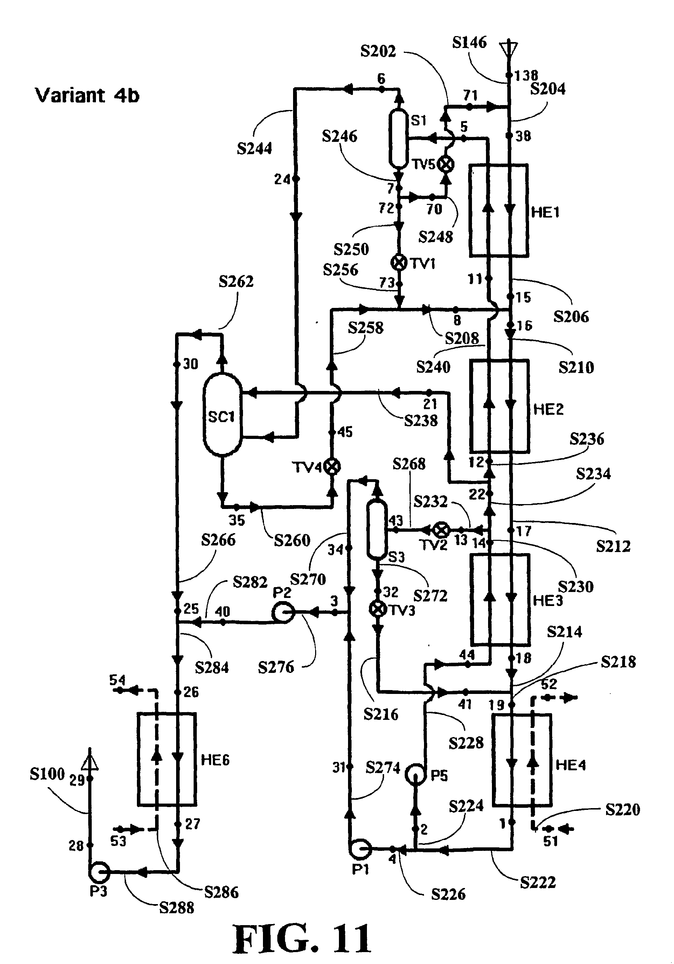

It is also possible to simplify **CTCSS Variant 2a** and **CTCSS Variant 2b** in the same manner than **CTCSS Variant 1a** and **CTCSS Variant 1b** are simplified to obtain **CTCSS Variant 3a** and **CTCSS Variant 3b.** This modular simplification of **CTCSS Variant 2a** and **CTCSS Variant 2b,** with preheating of the stream **S264** of the working fluid having the parameters as at the point **28** is shown in **Figure 10****,** and is referred to as **CTCSS Variant 4a;** while a similar simplification **of CTCSS CTCSS Variant 2b,** without preheating the stream **S264** of the working fluid having the parameters as at the point **28,** is shown in **Figure** 11, and referred to as **CTCSS Variant 4b.**

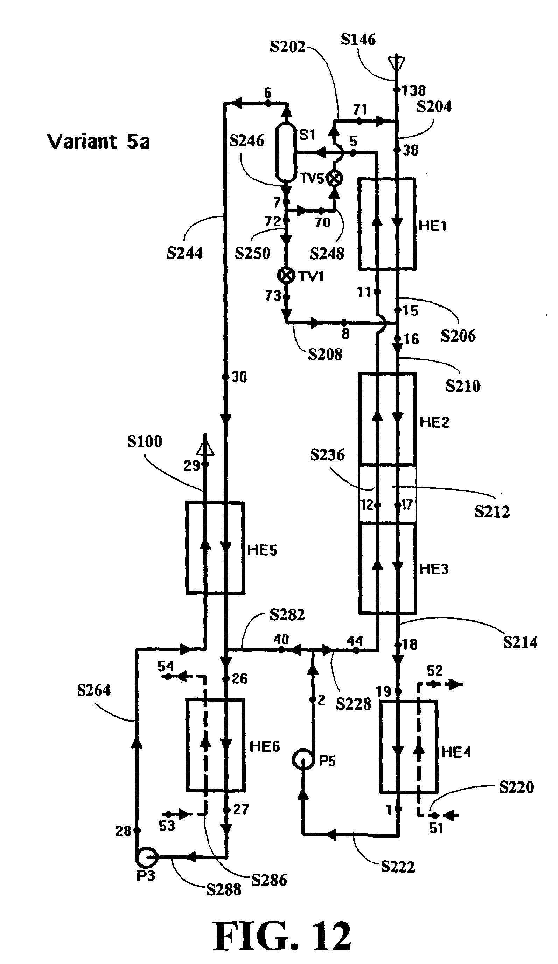

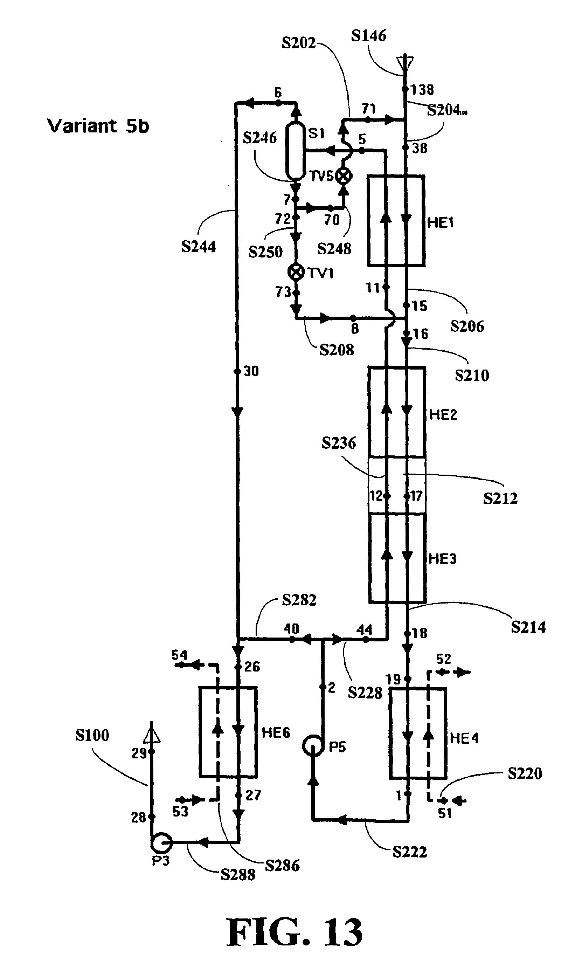

A final modular simplification is attained by eliminating the scrubber **SC1,** and the use of the stream **S282** having the parameters as at the point **40** without any enrichment, *i.e*., the composition of stream **S282** having the parameters as at the point **40** is the same as the composition of the basic solution. This modular simplification of **CTCSS Variant 4a,** with preheating of the stream **S264** of the working fluid having the parameters as at the point **28** is shown in **Figure 12****,** and is referred to as **CTCSS Variant 5a.** A similar simplification of **CTCSS Variant 4b,** without preheating the stream **S264** of the working fluid having the parameters as at the point **28,** is shown in **Figure 13****,** and referred to as **CTCSS Variant 5b.** It must be noted that the modular simplification of the **CTCSS Variant 5a** and **CTCSS Variant 5b** results in a substantial reduction of the efficiency of the **CTCSS.** Also in **Variants 5a and 5b,** the stream **S222** having the parameters as at the point **1** is not split into two substreams **S222** and **S224** which are then separately pressurized, but is pressurized in as a single stream in a pump **P5** forming a stream **S292** having parameters as at a point **46.** The stream **S292** is then split to form the stream **S228** having the parameters as at the point **44** and the stream **S282** having the parameters as at the point **40.**

The **CTCSSs** of this invention is described in the five basic variants given above; (two of which utilize external heat, and three of which utilize only the heat available from the stream **S200** of the working fluid entering the **CTCSSs** of this invention). One experienced in the art would be able to generate additional combinations and variants of the proposed systems. For instance, it is possible to simplify **CTCSS Variant 4a** by eliminating the scrubber **SC1,** while retaining the enrichment of the stream **S282** having the parameters as at the points **40.** (Likewise it is possible to retain the scrubber **SC1,** and eliminate only the enrichment process for the stream **S282** having the parameters as at the points **40.**) However all such modular simplifications are still based on the initial **CTCSS Variant 1a** of the **CTCSSs** of this invention.

The efficacy of the CTCSS of this invention, *per se,* can be assessed by its compression ratio; *i.e.,* a ratio of the pressure of the stream **S284** having the parameters as at the point **26** (at the entrance to the high pressure condenser, heat exchanger **HE6)** to the pressure of the stream **S146** having the parameters as at the point **138** (at the point of entrance of the stream of working solution into the **CTCSS**)**.** The impact of the efficacy of the **CTCSS** on the efficiency of the whole system depends on the structure and parameters of work of the whole system. For assessing the **CTCSSs** of this invention, several calculations have been performed. A stream comprising a water-ammonia mixture having a composition of 0.83 weight fraction of ammonia (*i.e*., 83 wt.% ammonia), with an initial temperature of 1050°F and an initial pressure of 1800 psia, has been expanded in a turbine with an isoenthropic efficiency of 0.875 (87.5%). The parameters of the vapor upon exiting the turbine correspond to the stream **S146** having the parameters at the point **138.** Such computations have been performed for all proposed "b" variants of the CTCSS of this invention described above, and for a simple condenser system as well.

A summary of performance for the primary version of the system **100 of** **Figure 1** using the **Variant 1a** of the **CTCSS** is given in **Table 1.** The parameters of key points of the system **100** are given in **Table** 2. The data in these tables are based on the use of very low quality fuel, (*i.e*., brown coal with a wetness of 50% by weight.)

As is shown in the data, in spite of the fuel quality, the primary version of the system achieves a very high efficiency. The thermal efficiency is 47.13%. In combination with an RCSS module, the LHV efficiency is 45.25%.

By comparison, the most advanced supercritical Rankine cycle available in the prior art has an LHV efficiency of 42%.

It must also be noted that with superior fuels, one can expect substantially higher efficiencies from the proposed systems. With low wetness fuel (approximately 10% wetness by weight,) the system of this invention can attain an LHV efficiency of over 46%

**TABLE 1**

| **Performance Summary** | | |
|---|---|---|
| Heat in | 530,395.92 kW | 1,519.55 Btu/Ib |
| Heat rejected | 271,643.78 kW | 778.24 Btu/lb |
| Turbine enthalpy Drops | 275,314.97 kW | 788.76 Btu/lb |
| Gross Generator Power | 270,574.05 kW | 775.18 Btu/lb |
| Process Pumps (-47.59) | -17,652.90 kW | -50.57 Btu/lb |
| Cycle Output | 252,921.14 kW | 724.60 Btu/Ib |
| Other Pumps and Fans (-7.87) | -2,921.11 kW | -8.37 Btu/lb |
| Net Output | 250,000.03 kW | 716.23 Btu/lb |
| Gross Generator Power | 270,574.05 kW | 775.18 Btu/lb |
| Cycle Output | 252,921.14 kW | 724.60 Btu/lb |
| Net Output | 250,000.03 kW | 716.23 Btu/lb |
| Net thermal efficiency | 47.13% % | |
| Second Law Limit | 66.75% % | |
| Second Law Efficiency | 70.61 % % | |
| LHV Heat Avail (at 59°F) | 552,515.85 kW | 1,582.92 Btu/lb |
| LHV Efficiency | 45.25% % | |
| Overall Heat Balance Btu/lb | | |
| Heat In: | **Source + pumps = 1,519.55 + 47. 59 = 1,567.14** | |
| Heat Out: | **Turbines + condenser = 788.76 + 778.24 = 1,567.00** | |

**TABLE 2**

| **System Point Summary** | | | | | | | | | | |
|---|---|---|---|---|---|---|---|---|---|---|
| **Pt.** | **X lb/lb** | **T °F** | **P psia** | **H Btu/lb** | **S Btu/lb-R** | **Ex Btu/lb** | **Grel G/G=1** | **Gabs lb/h** | **Ph.** | **Wetness/T lb/lb/°F** |
| **Working Fluid** | | | | | | | | | | |
| 1 | 0.5041 | 65.79 | 38.157 | -72.4690 | 0,0136 | 0.1850 | 5.94491 | 7,085,135 | Mix | 1 |
| 2 | 0.5041 | 65.79 | 38.157 | -72.4690 | 0.0136 | 0.1850 | 5.55636 | 6,622,067 | Mix | 1 |
| 3 | 0.6377 | 91.16 | 67.835 | 106.6356 | 0.3310 | 15.2492 | 0.53371 | 636,074 | Mix | 0.7586 |
| 4 | 0.5041 | 65.79 | 38.157 | -72.4690 | 0.0136 | 0.1850 | 0.38855 | 463,068 | Mix | 1 |
| 5 | 0.5041 | 188.51 | 99.048 | 264.8792 | 0.5765 | 45.5344 | 1.37636 | 1,640,346 | Mix | 0.6774 |
| 6 | 0.9367 | 188.51 | 99.048 | 659.6564 | 1.2501 | 92.9145 | 0.44403 | 529,195 | Mix | 0 |
| 7 | 0.2980 | 188.51 | 99.048 | 76.8630 | 0.2558 | 22.9692 | 0.93233 | 1,111,151 | Mix | 1 |
| 8 | 0.3047 | 147.65 | 42.157 | 73.0965 | 0.2542 | 20.0435 | 1.12349 | 1,338,971 | Mix | 0.9417 |
| 11 | 0.5041 | 142.65 | 101.048 | 95.0956 | 0.3041 | 17.0537 | 1.37636 | 1,640,346 | Mix | 0.8634 |
| 12 | 0.5041 | 120.97 | 103.048 | -10.7403 | 0.1248 | 4.2091 | 1.37636 | 1,640,346 | Mix | 1 |
| 13 | 0.5041 | 120.97 | 103.048 | -10.7403 | 0.1248 | 4.2091 | 3.94888 . | 4,706,276 | Mix | 1 |
| 14 | 0.5041 | 120.97 | 103.048 | -10.7403 | 0.1248 | 4.2091 | 5.55636 | 6,622,067 | Mix | 1 |
| 15 | 0.7942 | 147.65 | 42.157 | 509.9721 | 1.0721 | 34.9004 | 1.01770 | 1,212,895 | Mix | 0.2181 |
| 16 | 0.5374 | 147.65 | 42.157 | 280.7424 | 0.6430 | 27.1050 | 2.14119 | 2,551,866 | Mix | 0.5978 |
| 17 | 0.5374 | 127.13 | 41.157 | 212.7108 | 0.5300 | 17.6443 | 2.14119 | 2,551,866 | Mix | 0.6626 |
| 18 | 0.5374 | 83.99 | 40.157 | 53.5136 | 0.2485 | 4.4864 | 2.14119 | 2,551,866 | Mix | 0.8334 |
| 19 | 0.5041 | 80.46 | 40.157 | -2.1560 | 0.1453 | 2.1511 | 5.94491 | 7,085,135 | Mix | 0.9149 |
| 21 | 0.5041 | 118.00 | 97.048 | -10.7403 | 0.1249 | 4.1794 | 0.23112 | 275,446 | Mix | 0.9943 |
| 22 | 0.5041 | 120.97 | 103.048 | -10.7403 | 0.1248 | 4.2091 | 1.60748 | 1,915,792 | Mix | 1 |
| 23 | 0.6377 | 65.79 | 65.835 | -60.6817 | 0.0196 | 9.4569 | 0.53371 | 636,074 | Mix | 1 |
| 24 | 0.9367 | 188.51 | 99.048 | 659.6564 | 1.2501 | 92.9145 | 0.44403 | 529,195 | Mix | 0 |
| 25 | 0.9922 | 127.00 | 97.048 | 597.4895 | 1.1574 | 79.0471 | 0.46629 | 555,724 | Mix | 0 |
| 26 | 0.8030 | 88.38 | 97.048 | 246.3385 | 0.5519 | 41.1160 | 1.00000 | 1,191,799 | Mix | 0.535 |
| 27 | 0.8030 | 65.79 | 95.048 | -24.6000 | 0.0446 | 33.2775 | 1.00000 | 1,191,799 | Mix | 1 |
| 28 | 0.8030 | 67.89 | 877.323 | -20.6185 | 0.0459 | 36.5923 | 1.00000 | 1,191,799 | Liq | -168.29°F |
| 29 | 0.8030 | 67.89 | 877.323 | -20.6185 | 0.0459 | 36.5923 | 1.00000 | 1,191,799 | Liq | -168.29°F |
| 30 | 0.9922 | 127.00 | 97.048 | 597.4895 | 1.1574 | 79.0471 | 0.46629 | 555,724 | Mix | 0 |
| 31 | 0.5041 | 65.92 | 67.835 | -72.2578 | 0.0138 | 0.2927 | 0.38855 | 463,068 | Liq | -30.18°F |
| 32 | 0.4853 | 101.14 | 67.835 | -33.4935 | 0.0858 | 1.5891 | 3.80372 | 4,533,269 | Mix | 1 |
| 34 | 0.9955 | 101.14 | 67.835 | 585.4596 | 1.1762 | 57.2921 | 0.14516 | 173,007 | Mix | 0 |
| 35 | 0.3341 | 174.51 | 99.048 | 56.6024 | 0.2290 | 16.7621 | 0.20886 | 248,917 | Mix | 1 |
| 38 | 0.7942 | 193.51 | 43.157 | 739.591 | 1.4323 | 77.6873 | 1.01770 | 1,212,895 | Vap | 0°F |
| 40 | 0.6377 | 65.93 | 97.048 | -60.4546 | 0.0198 | 9.5777 | 0.53371 | 636,074 | Liq | -21.58°F |
| 41 | 0.4853 | 78.71 | 40.157 | -33.4935 | 0.0872 | 0.8794 | 3.80372 | 4,533,269 | Mix | 0.9611 |
| 43 | 0.5041 | 101.14 | 67.835 | -10.7403 | 0.1259 | 3.6368 | 3.94888 | 4,706,276 | Mix | 0.9632 |
| 44 | 0.5041 | 65.98 | 108.048 | -72.0882 | 0.0138 | 0.4372 | 5.55636 | 6,622,067 | Liq | -57.99°F |
| 45 | 0.3341 | 136.57 | 42.157 | 56.6024 | 0.2323 | 15.0369 | 0.20886 | 248,917 | Mix | 0.9409 |
| 70 | 0.2980 | 188.51 | 99.048 | 76.8630 | 0.2558 | 22.9692 | 0.01770 | 21,097 | Mix | 1 |
| 71 | 0.2980 | 151.15 | 43.157 | 76.8630 | 0.2589 | 21.3633 | 0.01770 | 21,097 | Mix | 0.9434 |
| 72 | 0.2980 | 188.51 | 99.048 | 76.8630 | 0.2558 | 22.9692 | 0.91463 | 1,090,054 | Mix | 1 |
| 73 | 0.2980 | 150.18 | 42.157 | 76.8630 | 0.2590 | 21.2813 | 0.91463 | 1,090,054 | Mix | 0.942 |
| 91 | 0.8030 | 135.84 | 1,915.000 | 59.2474 | 0.1803 | 46.7871 | 1.78904 | 2,132,176 | Liq | -198.86°F |
| 92 | 0.8030 | 214.30 | 1,915.000 | 153.8295 | 0.3293 | 64.0434 | 0.78904 | 940,377 | Liq | -120.4°F |
| 95 | 0.8030 . | 354.28 | 665.206 | 765.7739 | 1.1784 | 235.5835 | 0.78904 | 940,377 | Mix | 0.0062 |
| 98 | 0.8030 | 207.88 | 663.206 | 146.3108 | 0.3275 | 57.4875 | 0.78904 | 940,377 | Mix | 1 |
| 100 | 0.8030 | 70.60 | 1,915.000 | -15.3817 | 0.0476 | 40.9774 | 1.00000 | 1,191,799 | Liq | -264.1°F |
| 101 | 0.8030 | 333.88 | 1,905.000 | 332.4560 | 0.5719 | 116.8818 | 1.78904 | 2,132,176 | Mix | 1 |
| 102 | 0.3111 | 354.27 | 667.206 | 269.9730 | 0.5191 | 79.5755 | 0.85102 | 1,014,242 | Liq | -0.36°F |
| 103 | 0.1316 | 432.95 | 668.206 | 387.1429 | 0.6268 | 140.0832 | 0.86759 | 1,033,992 | Mix | 1 |
| 105 | 0.3111 | 354.40 | 682.206 | 270.1391 | 0.5192 | 79.6745 | 0.85102 | 1,014,242 | Liq | -2.84°F |
| 108 | 0.4514 | 351.88 | 665.206 | 401.6744 | 0.6952 | 120.5557 | 1.17492 | 1,400,266 | Mix | 0.7286 |
| 109 | 0.7912 | 359.33 | 667.206 | 778.3574 | 1.1923 | 240.9183 | 0.46514 | 554,354 | Mix | 0 |
| 110 | 0.5478 | 354.28 | 665.206 | 508.5062 | 0.8363 | 154.6294 | 1.64006 | 1,954,619 | Mix | 0.5219 |
| 111 | 0.8060 | 354.28 | 665.206 | 768.8484 | 1.1825 | 236.5510 | 0.78418 | 934,585 | Mix | 0 |
| 112 | 0.3111 | 354.28 | 665.206 | 269.9733 | 0.5191 | 79.5705 | 0.85588 | 1,020,035 | Mix | 1 |
| 113 | 0.3111 | 354.28 | 665.206 | 269.9730 | 0.5191 | 79.5703 | 0.85102 | 1,014,242 | Mix | 1 |
| 114 | 0.311 | 354.28 | 665.206 | 269.9730 | 0.5191 | 79.5703 | 0.00486 | 5,792 | Mix | 1 |
| 129 | 0.8030 | 67.89 | 877.323 | -20.6185 | 0.0459 | 36.5923 | 1.00000 | 1,191,799 | Liq | -168.29°F |
| 138 | 0.8030 | 223.16 | 43.157 | 751.3225 | 1.4524 | 79.0596 | 1.00000 | 1,191,799 | Vap | 31.4°F |
| 201 | 0.1316 | 437.54 | 1,900.000 | 392.8736 | 0.6278 | 145.2655 | 0.86759 | 1,033,992 | Liq | -133.11°F |
| 202 | 0.3115 | 499.16 | 1,900.000 | 477.0212 | 0.7461 | 168.8958 | 1.18512 | 1,412,425 | Liq | -0.01°F |
| 203 | 0.3115 | 522.88 | 4,960.000 | 495.4848 | 0.7493 | 185.6625 | 1.18512 | 1,412,425 | Liq | -291.54°F |
| 205 | 0.4514 | 434.95 | 668.206 | 971.8950 | 1.3572 | 347.3998 | 1.65663 | 1,974,369 | Mix | 0 |
| 206 | 0.4514 | 434.95 | 668.206 | 971.8950 | 1.3572 | 347.3998 | 1.17492 | 1,400,266 | Mix | 0 |
| 207 | 0.4514 | 434.95 | 668.206 | 971.8950 | 1.3572 | 347.3998 | 0.48171 | 574,103 | Mix | 0 |
| 300 | 0.8030 | 425.95 | 1,900.000 | 706.9376 | 1.0202 | 258.8395 | 1.78904 | 2,132,176 | Mix | 0 |
| 303 | 0.8030 | 425.95 | 1,900.000 | 706.9376 | 1.0202 | 258.8395 | 0.31753 | 378,433 | Mix | 0 |
| 304 | 0.3115 | 741.95 | 4,945.000 | 970.3022 | 1.1829 | 435.6085 | 1.18512 | 1,412,425 | Vap | 335.1°F |
| 305 | 0.8030 | 425.95 | 1,900.000 | 706.9376 | 1.0202 | 258.8395 | 1.47151 | 1,753,743 | Mix | 0 |
| 306 | 0.3115 | 799.57 | 4,941.565 | 1,064.3512 | 1.2595 | 489.9378 | 1.18512 | 1,412,425 | Vap | 392.7°F |
| 307 | 0.8030 | 799.57 | 1,882.420 | 1,047.3507 | 1.3478 | 429.3095 | 1.47151 | 1,753,743 | Vap | 374°F |
| 308 | 0.3115 | 689.20 | 4,948.617 | 855.8006 | 1.0853 | 371.7183 | 1.18512 | 1,412,425 | Vap | 282.4°F |
| 309 | 0.8030 | 741.95 | 1,885.000 | 1,003.2222 | 1.3118 | 403.8621 | 1.47151 | 1,753,743 | Vap | 316.4°F |
| 316 | 0.4514 | 822.70 | 673.206 | 1,235.0713 | 1.6027 | 483.2697 | 1.65663 | 974,369 | Vap | 387.1°F |
| 320 | 0.8030 | 741.95 | 1,885.000 | 1,003.2222 | 1.3118 | 403.8621 | 1.47151 | 1,753,743 | Vap | 316.4°F |
| 321 | 0.8030 | 425.95 | 1,900.000 | 706.9376 | 1.0202 | 258.8395 | 1.47151 | 1,753,743 | Mix | 0 |
| 400 | 0.3115 | 1,077.44 | 4,925.000 | 1,348.4669 | 1.4654 | 667.2434 | 1.18512 | 1,412,425 | Vap | 670.6°F |
| 401 | 0.3115 | 1,076.00 | 4,875.000 | 1,348.4669 | 1.4664 | 666.7327 | 1.18512 | 1,412,425 | Vap | 669.2°F |
| 402 | 0.3115 | 799.57 | 1,830.000 | 1,228.3755 | 1.4749 | 542.2095 | 1.18512 | 1,412,425 | Vap | 235.9°F |
| 408 | 0.3115 | 1,076.00 | 1,820.000 | 1,422.2497 | 1.6149 | 663.4834 | 1.18512 | 1,412,425 | Vap | 512.9°F |
| 409 | 0.8030 | 1,076.95 | 1,870.000 | 1,260.3152 | 1.5013 | 562.6547 | 1.47151 | 1,753,743 | Vap | 651.7°F |
| 410 | 0.8030 | 1,076.00 | 1,820.000 | 1,260.3152 | 1.5044 | 561.0765 | 1.00000 | 1,191,799 | Vap | 652.1°F |
| 411 | 0.4514 | 1,077.02 | 1,820.000 | 1,376.1600 | 1.5953 | 628.1848 | 1.65663 | 1,974,369 | Vap | 545.1°F |
| 412 | 0.8030 | 739.20 | 400.000 | 1,044.2181 | 1.5165 | 338.6899 | 1.00000 | 1,191,799 | Vap | 419.5°F |
| 413 | 0.8030 | 591.73 | 393.000 | 947.9302 | 1.4328 | 285.8039 | 1.00000 | 1,191,799 | Vap | 273.2°F |
| 420 | 0.8030 | 1,076.95 | 1,870.000 | 1,260.3152 | 1.5013 | 562.6547 | 0.47151 | 561,944 | Vap | 651.7°F |
| 421 | 0.8030 | 1,076.00 | 1,820.000 | 1,260.3152 | 1.5044 | 561.0765 | 0.47151 | 561,944 | Vap | 652.1°F |
| 422 | 0.8030 | 1,076.95 | 1,870.000 | 1,260.3152 | 1.5013 | 562.6547 | 1.00000 | 1,191,799 | Vap | 651.7°F |

| **Heat Source** | | | | | | | | | | |
|---|---|---|---|---|---|---|---|---|---|---|
| 500 | GAS | 1,220.00 | 14.933 | 497.1689 | 0.6515 | 176.8137 | 7.77223 | 9,262,927 | Vap | 1074.5°F |
| 501 | GAS | 1,220.00 | 14.933 | 497.1689 | 0.6515 | 176.8137 | 2.76825 | 3,299,191 | Vap | 1074.5°F |
| 502 | GAS | 773.73 | 14.881 | 361.2683 | 0.5578 | 89.4826 | 2.86115 | 3,409,918 | Vap | 628.3°F |
| 503 | GAS | 1,220.00 | 14.933 | 497.1689 | 0.6515 | 176.8137 | 2.97435 | 3,544,826 | Vap | 1074.5°F |
| 504 | GAS | 773.73 | 14.881 | 361.2683 | 0.5578 | 89.4826 | 4.91107 | 5,853,009 | Vap | 628.3°F |
| 505 | GAS | 773.73 | 14.881 | 361.2683 | 0.5578 | 89.4826 | 7.77223 | 9,262,927 | Vap | 628.3°F |
| 506 | GAS | 566.73 | 14.783 | 301.2562 | 0.5051 | 56.8388 | 7.77223 | 9,262,927 | Vap | 421.6°F |
| 507 | GAS | 1,220.00 | 14.933 | 497.1689 | 0.6515 | 176.8137 | 2.02963 | 2,418,910 | Vap | 1074.5°F |
| 508 | GAS | 850.32 | 14.898 | 383.9639 | 0.5756 | 102.9596 | 2.02963 | 2,418,910 | Vap | 704.9F |
| 509 | GAS | 566.73 | 14.783 | 301.2562 | 0.5051 | 56.8388 | 3.60807 | 4,300,096 | Vap | 421.6°F |
| 510 | GAS | 569.77 | 14.933 | 302.1231 | 0.5052 | 57.6399 | 3.60807 | 4,300,096 | Vap | 424.2°F |
| 511 | GAS | 850.32 | 14.898 | 383.9639 | 0.5756 | 102.9596 | 2.97435 | 3,544,826 | Vap | 704.9°F |
| 512 | GAS | 850.32 | 14.898 | 383.9639 | 0.5756 | 102.9596 | 2.76825 | 3,299,191 | Vap | 704.9°F |
| 516 | GAS | 566.73 | 14.783 | 301.2562 | 0.5051 | 56.8388 | 2.26279 | 2,696,786 | Vap | 421.6°F |
| 517 | GAS | 714.20 | 14.858 | 343.8090 | 0.5434 | 79.4906 | 2.26279 | 2,696,786 | Vap | 568.9°F |
| 520 | GAS | 850.32 | 14.898 | 383.9639 | 0.5756 | 102.9596 | 7.77223 | 9,262,927 | Vap | 704.9°F |
| 521 | GAS | 850.32 | 14.898 | 383.9639 | 0.5756 | 102.9596 | 4.91107 | 5,853,009 | Vap | 704.9°F |
| 522 | GAS | 850.32 | 14.898 | 383.9639 | 0.5756 | 102.9596 | 2.86115 | 3,409,918 | Vap | 704.9°F |
| 530 | GAS | 714.20 | 14.858 | 343.8090 | 0.5434 | 79.4906 | 7.77223 | 9,262,927 | Vap | 568.9F |
| 531 | GAS | 714.20 | 14.858 | 343.8090 | 0.5434 | 79.4906 | 10.0350 | 11,959,713 | Vap | 568.9°F |
| 533 | GAS | 566.73 | 14.783 | 301.2562 | 0.5051 | 56.8388 | 10.0350 | 11,959,713 | Vap | 421.6°F |
| 550 | GAS | 566.73 | 14.783 | 301.2562 | 0.5051 | 56.8388 | 4.16415 | 4,962,831 | Vap | 421.6F |
| 551 | GAS | 566.73 | 14.783 | 301.2562 | 0.5051 | 56.8388 | 1.21374 | 1,446,530 | Vap | 421.6°F |
| 552 | GAS | 566.73 | 14.783 | 301.2562 | 0.5051 | 56.8388 | 2.95042 | 3,516,301 | Vap | 421.6°F |
| 555 | GAS | 211.36 | 14.765 | 202.4733 | 0.3872 | 19.1795 | 2.95042 | 3,516,301 | Vap | 66.3°F |
| 557 | GAS | 145.00 | 14.693 | 184.4675 | 0.3593 | 15.6477 | 2.95042 | 3,516,301 | Vap. | 0.1°F |
| 560 | AIR | 59.00 | 14.693 | 13.3154 | 0.0655 | -0.5500 | 2.44609 | 2,915,245 | Vap | 13.8°F |
| 561 | AIR | 62.67 | 15.005 | 14.2015 | 0.0658 | 0.2041 | 2.44609 | 2,915,245 | Vap | 17°F |
| 562 | AIR | 548.73 | 14.987 | 133.3511. | 0.2268 | 35.8362 | 2.44609 | 2,915,245 | Vap | 503.1°F |
| 570 | GAS | 570.86 | 14.987 | 302.4348 | 0.5052 | 57.9282 | 1.21374 | 1,446,530 | Vap | 425.2°F |
| 571 | GAS | 556.72 | 14.987 | 189.4257 | 0.3191 | 43.1553 | 3.65983 | 4,361,775 | Mix | 411.03 |
| 585 | Water | 59.00 | 14.693 | 27.1360 | 0.0536 | 0.0429 | 0.26589 | 316,888 | Liq | -152.95°F |
| 586 | Ash | 59.00 | 14.693 | 6.7500 | 0.0000 | 22.4809 | 0.02659 | 31,689 | Liq | 518.67°F |
| 587 | DAF | 59.00 | 14.693 | 6.7500 | 0.0000 | 22.4809 | 0.23930 | 285,199 | Liq | 518.67°F |
| 590 | Ash | 1,742.00 | 14.693 | 427.5000 | 0.3614 | 799.4526 | 0.02659 | 31,689 | Liq | 2201.67°F |
| 598 | GAS | 2,183.54 | 14.933 | 815.8004 | 0.8009 | 417.9519 | 2.95042 | 3,516,301 | Vap | 2038°F |
| 599 | GAS | 1,838.11 | 14.933 | 698.2770 | 0.7532 | 325.1346 | 2.95042 | 3,516,301 | Vap | 1692.6°F |
| 600 | GAS | 1,742.00 | 14.933 | 666.1683 | 0.7390 | 300.4294 | 4.16415 | 4,962,831 | Vap | 1596.5°F |
| 602 | GAS | 566.73 | 14.783 | 301.2562 | 0.5051 | 56.8388 | 4.16415 | 4,962,831 | Vap | 421.6°F |

| **Coolant** | | | | | | | | | | |
|---|---|---|---|---|---|---|---|---|---|---|
| 50 | Water | 51.70 | 14.693 | 19.8239 | 0.0394 | 0.0948 | 21.2657 | 25,344,472 | Liq | -160.25°F |
| 51 | Water | 51.79 | 24.693 | 19.9424 | 0.0396 | 0.1233 | 21.2657 | 25,344,472 | Liq | -187.57°F |
| 52 | Water | 71.46 | 14.693 | 39.5987 | 0.0774 | 0.1902 | 21.2657 | 25,344,472 | Liq | -140.5°F |
| 53 | Water | 51.70 | 14.693 | 19.8239 | 0.0394 | 0.0948 | 11.7924 | 14,054,124 | Liq | -160.25°F |
| 54 | Water | 51.79 | 24.693 | 19.9424 | 0.0396 | 0.1233 | 11.7924 | 14,054,124 | Liq | -187.57°F |
| 55 | Water | 74.78 | 14.693 | 42.9182 | 0.0836 | 0.2781 | 11.7924 | 14,054,124 | Liq | -137.17F |
| 56 | Water | 51.70 | 14.693 | 19.8239 | 0.0394 | 0.0948 | 3.01167 | 3,589,308 | Liq | -160.25°F |
| 57 | Water | 51.79 | 24.693 | 19.9424 | 0.0396 | 0.1233 | 3.01167 | 3,589,308 | Liq | -187.57°F |
| 58 | Water | 81.46 | 14_{.}693 | 49.5933 | 0.0960 | 0.5154 | 3.01167 | 3,589,308 | Liq | -130.49°F |

The data in Tables 1 and 2 clearly evidence that the systems and apparatuses of this invention have improved heat extraction efficiencies and better utilize the energy in the flue gas streams from combustors without cause thermal stress and damage to heat recovery vapor generator, where heat from the flue gas is used to vaporize several working fluid stream having different composition.

Although the invention has been disclosed with reference to its preferred embodiments, from reading this description those of skill in the art may appreciate changes and modification that may be made which do not depart from the scope of the invention as described above and claimed hereafter.

## Claims

1. A process for extracting energy from a multi-component working fluid comprising the steps of:
forming a fully condensed, higher pressure, rich working fluid stream (108) from a spent rich working fluid stream (S146) and a rich working fluid stream (S110), where the rich working fluid stream has a high concentration of a low boiling component of the multi-component working fluid,
forming a fully condensed, higher pressure, lean working fluid stream (S174) from a first portion of a partially vaporized, higher pressure, rich working fluid stream (S122) and a leaner liquid stream (S172) having a lower concentration of the low boiling component of the multi-component fluid, where the fully condensed, higher pressure, lean working fluid stream (S174) has a low concentration of the low boiling component of the multi-component working fluid,
vaporizing a second portion of the partially vaporized, higher pressure, rich working fluid stream (S124) with heat derived from a mixed flue gas stream (FG12) and a spent intermediate working fluid stream (S126) to form a fully vaporized, higher pressure, rich working fluid stream (S134),
vaporizing the fully condensed, higher pressure, lean working fluid stream (S174) with heat derived from the mixed flue gas stream (FG12) and a spent, intermediate pressure, rich working fluid stream (S142) to form a fully vaporized, higher pressure, lean working fluid stream (S184) and a cooled, spent, intermediate pressure rich working fluid stream (S144),
extracting a first amount of electric power or other useable energy from a portion of thermal energy in the fully vaporized, higher pressure, lean working fluid stream (S184) in a first high pressure turbine (T) to form a spent lean working fluid stream (S188),
forming a fully vaporized intermediate working fluid stream (S152) from a first portion of the fully vaporized high pressure rich working fluid stream (S136) and a reheated spent lean working fluid stream (S150), where the fully vaporized intermediate working fluid stream (S152) has a concentration of the low boiling component of the multi-component fluid between the high concentration of the rich working fluid and the low concentration of the lean working fluid,
extracting a second amount of electric power or other useable energy from a portion of thermal energy in the fully vaporized intermediate working fluid stream (S152) in a low concentration turbine (LCT) to form the spent intermediate working fluid stream (S126),
extracting a third amount of electric power or other useable energy from a portion of thermal energy in a second portion of the high pressure rich working fluid stream (S138) in a second high pressure turbine (HPT) to form the spent, intermediate pressure rich working fluid stream (S142), and
extracting a fourth amount of electric power or other useable energy from a portion of thermal energy in the cooled, spent, intermediate pressure rich working fluid stream (S144) in a low pressure turbine (LPT) to form the spent rich working fluid stream (S146).

2. The process of claim 1, further comprising the steps of:
extracting a portion of thermal energy in a fully vaporized, higher pressure lean working fluid stream (S186) having parameters as at a point (401) in a first high pressure turbine (T) to produce a first amount of usable energy forming a spent lean working fluid stream (S188) having parameters as at a point (402),
reheating the spent lean working fluid stream (S188) having the parameters as at the point (402) in a heat recovery vapor generator utilizing heat from a mixed flue gas stream to form a reheated spent lean working fluid stream (S150) having parameter as at a point (408),
mixing the reheated spent lean working fluid stream (S150) having the parameter as at the point (408) with a pressure adjusted first portion of a fully vaporized, higher pressure rich working fluid stream (S148) having parameter as at a point (421) to form a fully vaporized, intermediate composition working fluid stream (S152) having parameter as at a point (411),
extracting a portion of thermal energy in from the fully vaporized, intermediate composition working fluid stream (S152) having the parameter as at the point (411) in a low concentration turbine (LCT) to produce a second amount of usable energy forming a spent intermediate working fluid stream (S126) having parameter as at a point (316),
extracting thermal energy from a second portion of the fully vaporized, higher pressure rich working fluid stream (S140) having the parameter as at the point (410) in a second high pressure turbine (HPT) to produce a third amount of usable energy forming a spent intermediate pressure rich working fluid stream (S142) having parameter as at a point (412),
passing the spent intermediate pressure rich working fluid stream (S142) having the parameter as at the point (412) in counter-flow with a higher pressure lean working fluid stream (S175) having parameters as at a point (212) in a first heat exchange unit forming a heated, higher pressure lean working fluid stream (S176) having parameter as at a point (203) and a cooled intermediate pressure, rich working fluid stream (S144) having parameters as at a point (413),
extracting thermal energy from the cooled intermediate pressure, rich working fluid stream (S144) having the parameters as at the point (413) in a low pressure turbine (LPT) to produce a fourth amount of usable energy forming a spent rich working fluid stream (S146) having parameter as at a point (138),
fully condensing the spent rich working fluid stream (S146) having the parameter as at the point (138) in a condensation and thermal compression subsystem (CTCSS) to form a first fully condensed, rich working fluid stream (S102) having parameter as at a point (129),
pressurizing the first fully condensed, rich working fluid stream (S102) having the parameters as at the point (129) and a second fully condensed, rich working fluid stream (S114) having parameters as at a point 98 to form a first fully condensed, higher pressure rich working fluid stream (S104) having parameters as at a point (100) and a second fully condensed, higher pressure rich working fluid stream (S106) having parameters as at a point (92),
mixing the first and second fully condensed, higher pressure rich working fluid streams (S104) and (S106) to form a combined fully condensed, higher pressure rich working fluid stream (S108) having parameters as at a point (91),
passing the combined fully condensed, higher pressure rich working fluid stream (S108) having the parameters as at the point (91) in counter-flow with a second rich working fluid stream (S110) having parameters as at a point (95) in a first heat exchanger (HE11) forming the second fully condensed rich working fluid stream (S114) having parameters as at a point (98) and a heated, higher pressure rich working fluid stream (S112) having parameters as at a point (101),
passing the heated, higher pressure rich working fluid stream (S112) having the parameters as at the point (101) in counter-flow with a first portion of a cooled, spent intermediate composition working fluid stream (S116) having parameters as at a point (206) in a second heat exchanger (HE12) forming the cooled first portion of the cooled, spent intermediate composition working fluid stream (S120) having parameters as at a point (108) and a partially vaporized, higher pressure rich working fluid stream (S118) having parameters as at a point (300),
passing a first portion of the partially vaporized, higher pressure rich working fluid stream (S124) having the parameters as at the point (305) in counter-flow with the spent intermediate composition working fluid stream (S126) having the parameters as at the point (316) in a third heat exchanger (HE13) forming a cooled, spent intermediate composition working fluid stream (S130) having parameters as at a point (205) and a vaporized, higher pressure rich working fluid stream (S128) having parameters as at a point (309),
feeding a second portion of the cooled intermediate composition working fluid stream (S154) having parameters as at a point (207) into a lower section of a scrubber (SC2) and a first portion of a lean liquid stream (S168) having parameters as at a point (102) into a top of the scrubber (SC2),
withdrawing a very lean liquid stream (S170) having parameters as at a point (103) from a bottom of the scrubber (SC2) and a first enriched vapor stream (S156) having parameters as at a point (109),
mixing the first enriched vapour stream (S156) having the parameters as at the point (109) with the cooled first portion of the cooled, spent intermediate composition working fluid stream (S120) having parameters as at a point (108) to form a second mixed stream (S158) having parameters as at a point (110),
separating the second mixed stream (S158) having the parameters as at the point (110) in a gravity separator (S10) to form a second enriched vapor stream (S160) having parameters as at a point (111) and the lean liquid stream (S162) having parameters as at a point (112),
mixing a second portion of the lean liquid stream (S166) having parameters as at a point (114) with the second enriched vapor stream (S160) having parameters as at a point (111) to form the second rich working fluid stream (S110) having parameters as at a point (95),
mixing a pressure adjusted, very lean stream (S172) having parameters as at a point (201) with a second portion of the partially vaporized, higher pressure rich working fluid stream (S122) having the parameters as at the point (303) to form a fully condensed, lean working fluid stream (S174) having parameters as at a point (202),
pressuring the fully condensed, lean working fluid stream (S174) having parameters as at a point (202) to form the fully condensed, higher pressure lean working fluid stream (S175) having parameters as at a point (212),
fully vaporizing the heated, higher pressure lean working fluid stream (S176) having parameters as at a point (203) in counter-flow with the mixed flue gas stream to form the fully vaporized, higher pressure lean working fluid stream (S186) having the parameters as at the point (401), and
fully vaporizing the first portion of the vaporized, higher pressure rich working fluid stream (S128) having the parameters as at the point (309) in counter-flow with the mixed flue gas stream to form the fully vaporized, higher pressure rich working fluid stream (S134) having parameters as at a point (409).

3. A system for extracting energy in a thermodynamic cycle comprising:
a vaporizing subsystem comprising a heat recovery vapour generator either alone or in combination with a separate heat exchange unit (HE16) adapted to (a) fully vaporize a higher pressure, lean working fluid stream (S175) comprising a first portion of a partially vaporized, higher pressure rich working fluid stream (S122) and a very lean liquid stream (S172), (b) fully vaporize a first portion of a higher pressure, rich working fluid stream (S124), and (c) reheat a spent lean working fluid stream (S188) from heat derived from a mixed flue gas stream (FG12) forming a fully vaporized, higher pressure lean working fluid stream (S184), a fully vaporized, higher pressure rich working fluid stream (S134), and a reheated, spent lean working fluid stream (S150),
an energy conversion subsystem including:
a first high pressure turbine (T) adapted to convert a portion of thermal energy in the fully vaporized, higher pressure lean working fluid stream (S184) into a first amount of useable energy forming the spent lean working fluid stream (S188), a low concentration turbine (LCT) adapted to convert a portion of thermal energy in a fully vaporized. intermediate working fluid stream (S152) into a second amount of useable energy, where the fully vaporized intermediate working fluid stream (S152) comprises a first portion of a pressure adjusted, fully vaporized, rich working fluid stream (S136) and the reheated, spent lean working fluid stream (S150) forming a spent intermediate working fluid stream (S126), and a rich working fluid stream extraction unit including:
a second high pressure turbine or stage (HPT) adapted to convert a portion of thermal energy in with a second portion of the fully vaporized, higher pressure rich working fluid stream (S134) into a third amount of useable energy forming a spent, intermediate pressure rich working fluid stream (S142) and
a low pressure turbine or stage (LPT) adapted to convert a portion of heat associated with a cooled, spent, intermediate pressure rich working fluid stream (S144) into a fourth amount of useable energy to form a spent rich working fluid stream (S146),
a separation subsystem including:
a scrubber (SC2) adapted to scrub and separate a first portion of a cooled, spent intermediate working fluid stream (S154) and a first portion of a lean liquid stream (S164) into a first enriched vapor stream (S156) and the very lean liquid stream (S170), and
a separator (S10) adapted to separate a mixed stream (S158) comprising a cooled second portion of the cooled, spent intermediate working fluid stream (S120) and the first enriched vapor stream (S156) into a second enriched vapor stream (S160) and the lean liquid stream (S162),
a condensation subsystem comprising :
a condenser or a condensation and thermal compression subsystem adapted to fully condense the spent rich working fluid stream (S146) into a first fully condensed rich working fluid stream (S102), and
a heat exchange subsystem including:
a first heat exchange unit (HE11) adapted to fully condense a second rich working fluid stream comprising the second enriched vapor stream and a second portion of the lean liquid stream and to heat a combined, higher pressure rich working fluid stream comprising a first fully condensed, higher pressure rich working fluid stream and a second fully condensed, higher pressure rich working fluid stream,
a second heat exchange unit (HE12) adapted to partially vaporize the combined rich working fluid stream and to cool the second portion of the spent intermediate working fluid stream forming a partially vaporized, higher pressure rich working fluid stream and the cooled second portion of the cooled, spent intermediate working fluid stream, and
a third heat exchange unit (HE13) adapted to vaporize a second portion of the partially vaporize the combined rich working fluid stream and to cool the spent intermediate working fluid stream forming the vaporized, higher pressure rich working fluid stream and the cooled spent intermediate working fluid.

4. The system of claim 3, further comprising;
a pressurizing subsystem including:
a first pump (P16) adapted to increase a pressure of the first fully condensed rich working fluid stream to form the first fully condensed, higher pressure rich working fluid stream,
a second pump (P11) adapted to increase a pressure of the second fully condensed rich working fluid stream to form the second fully condensed, higher pressure rich working fluid stream,
a third pump (P14) adapted to increase a pressure of the fully condensed lean working fluid stream to form the fully condensed, higher pressure lean working fluid stream.

5. The system of claim 3, wherein the vaporization subsystem comprises a heat recovery vapor generator, which utilizes thermal energy in a mixed flue gas stream (FG12) comprising an hot initial flue gas stream (FG10) and a portion of a spent flue gas stream (FG26), whereby the temperature of the hot initial flue gas stream is reduced to reduce damage to the heat recovery vapor generator.

6. The system of claim 3 , wherein the first heat exchange unit is a first heat exchanger (HE11), the second heat exchange unit is a boiler-condenser (HE12), and the third heat exchange unit is a recuperative heat exchanger (HE13).

7. The system of claim 3, wherein the vaporization subsystem is a heat recovery vapor generator having three heat exchange zones, the first zone (HR1) is adapted to vaporize the lean working fluid stream (S175) with heat derived from a flue gas stream (F12) and a spent higher pressure rich working fluid stream (S142), the second zone (HR2) is adapted to heat the vaporized lean working fluid stream (S175) with heat derived from the flue gas stream (FG12), and the third zone (HR3) is adapted to super-heat the lean vaporized lean working fluid stream, to super heat the rich working fluid stream and to reheat a spent lean working fluid stream.

8. The system of claim 3, wherein the flue gas stream (FG12) comprises a mixture of a hot flue gas stream (FG10) and a portion of a spent flue gas stream (FG26).

## Patentansprüche

1. Verfahren zum Ausziehen von Energie aus einem mehrkomponentigen Arbeitsfluid, das folgende Schritte umfasst:
Bilden eines vollständig kondensierten, fetten Hochdruck-Arbeitstluidstroms (108) aus einem erschöpften, fetten Arbeitsfluidstrom (S 146) und einem fetten Arbeitsfluidstrom (S 110), wobei der fette Arbeitsfluidstrom eine hohe Konzentration einer niedrigsiedenden Komponente des mehrkomponentigen Arbeitsfluids aufweist,
Bilden eines vollständig kondensierten, mageren Hochdruck-Arbeitsfluidstroms (S174) aus, einem ersten Anteil eines teilweise verdampften, fetten Flachdruck-Arbeitsfluidstroms (S122) und einem magereren Flüssigkeitsstrom (S172) mit einer niedrigeren Konzentration der niedrigsiedenden Komponente des mehrkomponentigen Fluids, wobei der vollständig kondensierte, magere Hochdruck-Arbeitsfluidstrom (S174) eine niedrigere Konzentration der niedrigsiedenden Komponente des mehrkomponentigen Arbeitsfluids aufweist,
Verdampfen eines zweiten Anteils des teilweise verdampften, fetten floehdruck-Arbeitsfluidstroms (S 124) mit Wärme, die aus einem gemischten Abgasstrom (FG12) und einem erschöpften mittleren Arbeitsfluidstrom (S 126) bezogen wird, um einen vollständig verdampften, fetten Hochdruck-Arbeitsfluidstrom (S 134) zu bilden,
Verdampfen des vollständig kondensierten, mageren Hochdruck-Arbeitsfluldstroms (S174) mit Wärme, die aus dem gemischten Abgasstrom (FG12) und einem erschöpften, fetten Mitteldruck-Arbeitsfluidstrom (S142) bezogen wird, um einen vollständig verdampften, mageren Hochdruck-Arbeitsfluidstrom (S 184) und einen abgekühlten, erschöpften, fetten Mitteldruck-Arbeitsfluidstrom (S144) zu bilden, Ausziehen einer ersten Menge an elektrischer Leistung oder anderer nutzbarer Energie aus einem Anteil von Wärmeenergie in dem vollständig verdampften, mageren Hochdruck-Arbeitsfluidstrom (S 184) in einer ersten Hochdruckturbine (T), um einen erschöpften, mageren Arbeitsfluidstrom (S188) zu bilden.
Bilden eines vollständig verdampften, mittleren Arbeitsfluidstroms (S152) aus einem ersten Anteil des vollständig verdampften, fetten Hochdruck-Arbeitsfluidstroms (S 13 6) und einem nacherwärmten, erschöpften, mageren Arbeitsfluidstrom (S 150), wobei der vollständig verdampfte, mittlere Arbeitsfluidstrom (S152) eine Konzentration der niedrigsiedenden Komponente des mehrkomponentigen Fluids zwischen der hohen Konzentration des fetten Arbeitsfluids und der niedrigen Konzentration des mageren Arbeitsfluids aufweist,
Ausziehen einer zweiten Menge an elektrischer Leistung oder anderer nutzbarer Energie aus einem Anteil von Wärmeenergie in dem vollständig verdampften, mittleren Arbeitsfluidstrom (S152) in einer Niedrigkonzentrationsturbine (LCT), um den erschöpften, mittleren Arbeitsfluidstrom (S 126) zu bilden,
Ausziehen einer dritten Menge an elektrischer Leistung oder anderer nutzbarer Energie aus einem Anteil von Wärmeenergie in einem zweiten Anteil des fetten Hochdruck-Arbeitsfluidstroms (S 138) in einer zweiten Hochdruckturbine (HPT), um den erschöpften, fetten Mitteldruck-Arbeitsfluidstrom (S142) zu bilden, und
Ausziehen einer vierten Menge an elektrischer Leistung oder anderer nutzbarer Energie aus einem Anteil von Wärmeenergie in dem abgekühlten, erschöpften, fetten Mitteldruck-Arbeitsfluidstrom (S 144) in einer Niederdruckturbine (LPT), um den erschöpften fetten Arbeitsfluidstrom (S 146) zu bilden.

2. Verfahren nach Anspruch 1, das weiter folgende Schritte umfasst:
Ausziehen eines Anteils von Wärmeenergie in einem vollständig verdampften, mageren Hochdruck-Arbeitsfluidstrom (S 186) mit Parametern wie an einer Stelle (401) in einer ersten Hochdruckturbine (T), um eine erste Menge an nutzbarer Energie zu erzeugen, wobei ein erschöpfter, magerer Arbeitsfluidstrom (S 188) mit Parametern wie an einer Stelle (402) gebildet wird,
Nacherwärmen des erschöpften, mageren Arbeitsfluidstroms (S188) mit den Parametern wie an der Stelle (402) in einem Wärmerückgewinnungs-Dampferzeuger unter Nutzung von Wärme aus einem gemischten Abgasstrom, um einen nacherwärmten, erschöpften, mageren Arbeitsfluidstrom (S150) mit Parameter wie an einer Stelle (408) zu bilden,
Mischen des nacherwärmten, erschöpften, mageren Arbeitsfluidstroms (S 150) mit dem Parameter wie an der Stelle (408) mit einem druckangepassten ersten Anteil eines vollständig verdampften, fetten Hochdruck-Arbeitsfluidstroms (S 148) mit Parameter wie an einer Stelle (421), um einen vollständig verdampften, mittlere Zusammensetzung aufweisenden Arbeitsfluidstrom (S152) mit Parameter wie an einer Stelle (411) zu bilden,
Ausziehen eines Anteils von Wärmeenergie in aus dem vollständig verdampften, mittlere Zusammensetzung aufweisenden Arbeitsfluidstrom (S 152) mit dem Parameter wie an der Stelle (411) in einer Niedrigkonzentrationsturbine (LCT), um eine zweite Menge an nutzbarer Energie zu erzeugen, wobei ein erschöpfter, mittlerer Arbeitsfluidstrom (S 126) mit Parameter wie an einer Stelle (316) gebildet wird,
Ausziehen von Wärmeenergie aus einem zweiten Anteil des vollständig verdampften, fetten Hochdruck-Arbeitsfluidstroms (5140) mit dem Parameter wie an der Stelle (410) in einer zweiten Hochdruckturbine (HPT), um eine dritte Menge an nutzbarer Energie zu erzeugen, wobei ein erschöpfter, fetter Mitteldruck-Arbeitsfluidstrom (S 142) mit Parameter wie an einer Stelle (412) gebildet wird,
Leiten des erschöpften, fetten Mitteldruck-Arbeitsfluidstroms (S 142) mit dem Parameter wie an der Stelle (412) im Gegenstrom mit einem mageren Hochdruck-Arbeitsfluidstrom (S 175) mit Parametern wie an einer Stelle (212) in einer ersten Wärmetauscheinheit, wobei ein erwärmter, magerer Hochdruck-Arbeitsfluidstrom (S 176) mit Parameter wie an einer Stelle (203) und ein abgekühlter, fetter, Mitteldruck-Arbeitsfluidstrom (S144) mit Parametern wie an einer Stelle (413) gebildet werden,
Ausziehen von Wärmeenergie aus dem abgekühlten, fetten Mitteldruck-Arbeitsfluidstrom (S144) mit den Parametern wie an der Stelle (413) in einer Niederdruckturbine (LPT), um eine vierte Menge an nutzbarer Energie zu erzeugen, wobei ein erschöpfter, fetter Arbeitsfluidstrom (S 146) mit Parameter wie an einer Stelle (138) gebildet wird,
vollständiges Kondensieren des erschöpften, fetten Arbeitsfluidstroms (S 146) mit dem Parameter wie an der Stelle (138) in einem Kondensation- und Wärmedruck-Untersystem (CTCSS), um einen ersten vollständig kondensierten, fetten Arbeitsfluidstrom (S102) mit Parameter wie an einer Stelle (129) zu bilden,
Unterdrucksetzen des ersten vollständig kondensierten, fetten Arbeitsfluidstroms (S102) mit den Parametern wie an der Stelle (129) und eines zweiten vollständig kondensierten, fetten Arbeitsfluidstroms (S 114) mit Parametern wie an einer Stelle 98, um einen ersten vollständig kondensierten, fetten Hochdruck-Arbeitsfluidstrom (S 104) mit Parametern wie an einer Stelle (100) und einen zweiten vollständig kondensierten, fetten Hochdruck-Arbeitsfluidstrom (S106) mit Parametern wie an einer Stelle (92) zu bilden,
Mischen des ersten und des zweiten vollständig kondensierten, fetten Hochdruck-Arbeitsfluidstroms (S104) und (S106), um einen kombinierten, vollständig kondensierten, fetten Hochdruck-Arbeitsfluidstrom (S108) mit Parametern wie an einer Stelle (91) zu bilden,
Leiten des kombinierten, vollständig kondensierten, fetten Hochdruck-Arbeitsfluidstroms (S 108), mit den Parametern wie an der Stelle (91) im Gegenstrom mit einem zweiten fetten Arbeitsfluidstrom (S 110) mit Parametern wie an einer Stelle (95) in einem ersten Wärmetauscher (HE11), wobei der zweite vollständig kondensierte, fette Arbeitsfluidstrom (S 114) mit Parametern wie an einer Stelle (98) und ein erwärmter, fetter Hochdruck-Arbeitsfluidstrom (S 112) mit Parametern wie an einer Stelle (101) gebildet werden,
Leiten des erwärmten, fetten Hochdruck-Arbeitsfluidstroms (S 112) mit den Parametern wie an der Stelle (101) im Gegenstrom mit einem ersten Anteil eines abgekühlten, erschöpften, mittlere Zusammensetzung aufweisenden Arbeitsfluidstroms (S 116) mit Parametern wie an einer Stelle (206) in einem zweiten Wärmetauscher (HE12), wobei der abgekühlte erste Anteil des abgekühlten, erschöpften, mittlere Zusammensetzung aufweisenden Arbeitsfluidstroms (S120) mit Parametern wie an einer Stelle (108) und ein teilweise verdampfter, fetter Hochdruck-Arbeitsfluidstrom (S 118) mit Parametern wie an einer Stelle (300) gebildet werden,
Leiten eines ersten Anteils des teilweise verdampften, fetten Hochdruck-Arbeitsfluidstroms (S 124) mit den Parametern wie an der Stelle (305) im Gegenstrom mit dem erschöpften, mittlere Zusammensetzung aufweisenden Arbeitsfluidstrom (S126) mit den Parametern wie an der Stelle (316) in einem dritten Wärmetauscher (HE13), wobei ein abgekühlter, erschöpfter, mittlere Zusammensetzung aufweisenden Arbeitsfluidstrom (S130) mit Parametern wie an einer Stelle (205) und ein verdampfter, fetter Hochdruck-Arbeitsfluidstrom (S 128) mit Parametern wie an einer Stelle (309) gebildet werden,
Einspeisen eines zweiten Anteils des abgekühlten, mittlere Zusammensetzung aufweisenden Arbeitsfluidstroms (S 154) mit Parametern wie an einer Stelle (207) in einen unteren Abschnitt einer Waschvorrichtung (SC2) und eines ersten Anteils eins mageren Flüssigkeitsstroms (S 168) mit Parametern wie an einer Stelle (102) in einen oberen Abschnitt der Waschvorrichtung (SC2),
Entnehmen eines sehr mageren Flüssigkeitsstroms (S170) mit Parametern wie an einer Stelle (103) aus einem unteren Abschnitt der Waschvorrichtung (SC2) und einen ersten angereicherten Dampfstrom (S 156) mit Parametern wie an einer Stelle (109),
Mischen des ersten angereicherten Dampfstroms (S156) mit den Parametern wie an der Stelle (109) mit dem abgekühlten ersten Anteil des abgekühlten, erschöpften, mittlere Zusammensetzung aufweisenden Arbeitsfluidstroms (S120) mit Parametern wie an einer Stelle (108), um einen zweiten gemischten Strom (S158) mit Parametern wie an einer Stelle (110) zu bilden,
Trennen des zweiten gemischten Stroms (S158) mit den Parametern wie an der Stelle (110) in einer Schwerkraft-Trennvorrichtung (S 10), um einen zweiten angereicherten Dampfstrom (S 160) mit Parametern wie an einer Stelle (111) und den mageren Flüssigkeitsstrom (S 162) mit Parametern wie an einer Stelle (112) zu bilden,
Mischen eines zweiten Anteils des mageren Flüssigkeitsstroms (S 166) mit Parametern wie an einer Stelle (114) mit dem zweiten angereicherten Dampfstrom (S 160) mit Parametern wie an einer Stelle (111), um den zweiten fetten Arbeitsfluidstrom (S 110) mit Parametern wie an einer Stelle (95) zu bilden,
Mischen eines druckangepassten, sehr mageren Stroms (S172) mit Parametern wie an einer Stelle (201) mit einem zweiten Anteil des teilweise verdampften, fetten Hochdruck-Arbeitsfluidstroms (S122) mit den Parametern wie an der Stelle (303), um einen vollständig kondensierten, mageren Arbeitsfluidstrom (S174) mit Parametern wie an einer Stelle (202) zu bilden,
Unterdrucksetzen des vollständig kondensierten, mageren Arbeitsfluidstroms (S 174) mit Parametern wie an einer Stelle (202), um den vollständig kondensierten, mageren Hochdruck-Arbeitsfluidstrom (S 175) mit Parametern wie an einer Stelle (212) zu bilden,
vollständiges Verdampfen des erwärmten, mageren Hochdruck-Arbeitsfluidstroms (S 176) mit Parametern wie an einer Stelle (203) im Gegenstrom mit dem gemischten Abgasstrom, um den vollständig verdampften, mageren Hochdruck-Arbeitsfluidstrom (S 186) mit den Parametern wie an der Stelle (401) zu bilden, und vollständiges Verdampfen des ersten Anteils des verdampften, fetten Hochdruck-Arbeitsfluidstroms (S128) mit den Parametern wie an der Stelle (309) im Gegenstrom mit dem gemischten Abgasstrom, um den vollständig verdampften, fetten Hochdruck-Arbeitsfluidstrom (S 134) mit Parametern wie an einer Stelle (409) zu bilden.

3. System zum Ausziehen von Energie in einem thermodynamischen Kreisprozess, das Folgendes umfasst:
ein Verdamptungs-Untersystem, umfassend einen Wärmerückgewinnungs-Dampferzeuger, entweder allein oder in Kombination mit einer getrennten Wärmetauscheinheit (HE16), der dazu angepasst ist (a) einen mageren Hochdruck-Arbeitsfluidstrom (S175), umfassend einen ersten Anteil eines teilweise verdampften, fetten Hochdruck-Arbeitsfluidstroms (S122) und einen sehr mageren Flüssigkeitsstrom (S 172) vollständig zu verdampfen, (b) einen ersten Anteil eines fetten Hochdruck-Arbeitsfluidstroms (S 124) vollständig zu verdampfen, und (c) einen erschöpften, mageren Arbeitsfluidstrom (S188) aus Wärme, die aus einem gemischten Abgasstrom (FG12) bezogen wird, nachzuerwärmen, wobei ein vollständig verdampfter, magerer Hochdruck-Arbeitsfluidstrom (S 184), ein vollständig verdampfter, fetter Hochdruck-Arbeitsfluidstrom (S 134) und ein nacherwärmter, erschöpfter, magerer Arbeitsfluidstrom (S 150) gebildet werden,
ein Energieumwandlungs-Untersystem, das Folgendes umfasst:
eine erste Hochdruckturbine (T), die dazu angepasst ist, einen Anteil von Wärmeenergie in dem vollständig verdampften, mageren Hochdruck-Arbeitsfluidstrom (S 184) in eine erste Menge an nutzbarer Energie umzuwandeln, wobei der erschöpfte, magere Arbeitsfluidstrom (S188) gebildet wird, eine Niedrigkonzentrationsturbine (LCT) die dazu angepasst ist, einen Anteil von Wärmeenergie in einem vollständig verdampften, mittleren Arbeitsfluidstrom (S152) in eine zweite Menge an nutzbarer Energie umzuwandeln, wobei der vollständig verdampfte, mittlere Arbeitsfluidstrom (S 152) einen ersten Anteil eines druckangepassten, vollständig verdampften, fetten Arbeitsfluidstroms (S 13 6) und den nacherwärmten, erschöpften, mageren Arbeitsfluidstrom (S150) umfasst, wobei ein erschöpfter, mittlerer Arbeitsfluidstrom (S 126) gebildet wird, und eine Auszieheinheit für einen fetten Arbeitsfluidstrom, die Folgendes umfasst:
eine zweite Hochdruckturbine oder -stufe (HPT), die dazu angepasst ist, einen Anteil von Wärmeenergie in mit einem zweiten Anteil des vollständig verdampften, fetten Hochdruck-Arbeitsfluidstroms (S 134) in eine dritte Menge an nutzbarer Energie umzuwandeln, wobei ein erschöpfter, fetter, Mitteldruck-Arbeitsfluidstrom (S 142) gebildet wird, und
eine Niederdruckturbine oder -stufe (LPT), die dazu angepasst ist, einen Anteil von mit einem abgekühlten, erschöpften, fetten Mitteldruck-Arbeitsfluidstrom (S144) assoziierter Wärme in eine vierte Menge an nutzbarer Energie umzuwandeln, um einen erschöpften, fetten Arbeitsfluidstrom (S 146) zu bilden,
ein Trennungs-Untersystem, das Folgendes umfasst:
eine Waschvorrichtung (SC2), die dazu angepasst ist, einen ersten Anteil eines abgekühlten, erschöpften, mittleren Arbeitsfluidstroms (S 154) und einen ersten Anteil eines mageren Flüssigkeitsstroms (S 164) in einen ersten angereicherten Dampfstrom (S 156) und den sehr mageren Flüssigkeitsstrom (S 170) zu waschen und zu trennen, und
eine Trennvorrichtung (S 10), die dazu angepasst ist, einen gemischten Strom (S 158), umfassend einen abgekühlten zweiten Anteil des abgekühlten, erschöpften, mittleren Arbeitsfluidstroms (S 120) und den ersten angereicherten Dampfstrom (S 156), in einen zweiten angereicherten Dampfstrom (S 160) und den mageren Flüssigkeitsstrom ein Kondensations-Untersystem, das Folgendes umfasst:
einen Kondensator oder ein Kondensation- und Wärmedruck-Untersystem, der bzw. das dazu angepasst ist, den erschöpften, fetten Arbeitsfluidstrom (S 146) in einen ersten vollständig kondensierten, fetten Arbeitsfluidstrom (S 102) vollständig zu kondensieren, und
ein Wärmetausch-Untersystem, das Folgendes umfasst:
eine erste Wärmetauscheinheit (HE11), die dazu angepasst ist, einen zweiten fetten Arbeitsfluidstrom, umfassend den zweiten angereicherten Dampfstrom und einen zweiten Anteil des mageren Flüssigkeitsstroms, vollständig zu kondensieren und einen kombinierten, fetten Hochdruck-Arbeitsstrom, umfassend einen ersten vollständig kondensierten, fetten Hochdruck-Arbeitsstrom und einen zweiten vollständig kondensierten, fetten Hochdruck-Arbeitsfluidstrom, zu erwärmen,
eine zweite Wärmetauscheinheit (HE12), die dazu angepasst ist, den kombinierten fetten Arbeitsfluidstrom teilweise zu verdampfen und den zweiten Anteil des erschöpften, mittleren Arbeitsfluidstroms abzukühlen, wobei ein teilweise verdampfer, fetter Hochdruck-Arbeitsfluidstrom und der abgekühlte zweite Anteil des abgekühlten, erschöpften, mittleren Arbeitsfluidstroms gebildet werden, und
eine dritte Wärmetauscheinheit (HE13), die dazu angepasst ist, einen zweiten Anteil des teilweise verdampfen des [*sic*] kombinierten fetten Arbeitsfluidstroms zu verdampfen und den erschöpften, mittleren Arbeitsfluidstrom abzukühlen, wobei der verdampfte, fette Hochdruck-Arbeitsfluidstrom und das abgekühlte, erschöpfte, mittlere Abeitsfluid gebildet werden.

4. System nach Anspruch 3, das weiter Folgendes umfasst:
ein unter Druck stehendes Untersystem, das Folgendes umfasst:
eine erste Pumpe (P16), die dazu angepasst ist, einen Druck des ersten vollständig kondensierten, fetten Arbeitsfluidstroms zu erhöhen, um den ersten vollständig kondensierten, fetten Hochdruck-Arbeitsfluidstrom zu bilden,
eine zweite Pumpe (P11), die dazu angepasst ist, einen Druck des zweiten vollständig kondensierten, fetten Arbeitsfluidstroms zu erhöhen, um den zweiten vollständig kondensierten, fetten Hochdruck-Arbeitsfluidstrom zu bilden,
eine dritte Pumpe (P11), die dazu angepasst ist, einen Druck des vollständig kondensierten, mageren Arbeitsfluidstroms zu erhöhen, um den vollständig kondensierten, mageren Hochdruck-Arbeitsfluidstrom zu bilden,

5. System nach Anspruch 3, wobei das Verdampfungs-Untersystem einen Wärmerückgewinnungs-Dampferzeuger umfasst, der Wärmeenergie in einem gemischten Abgasstrom (FG12), umfassend einen heißen Ausgangs-Abgasstrom (FG10) und einen Anteil eines erschöpften Abgasstroms (FG26), nutzt, wodurch die Temperatur des heißen Ausgangs-Abgasstroms reduziert wird, um Beschädigungen des Wärmerückgewinnungs-Dampferzeugers zu reduzieren.

6. System nach Anspruch 3, wobei es sich bei der ersten Wärmetauscheinheit um einen ersten Wärmetauscher (HE11) handelt, es sich bei der zweiten Wärmetauscheinheit um einen Boiler-Kondensator (HE12) handelt und es sich bei der dritten Wärmetauscheinheit um einen Rückgewinnungs-Wärmetauscher (HE13) handelt.

7. System nach Anspruch 3, wobei es sich bei dem Verdampfungs-Untersystem um einen Wärmerückgewinnungs-Dampferzeuger mit drei Wärmetauschzonen handelt, wobei die erste Zone (HR1) dazu angepasst ist, den mageren Arbeitsfluidstrom (S 175) mit von einem Abgasstrom (FG12) und einem erschöpften, fetten Hochdruck-Arbeitsfluidstrom (S 142) bezogener Wärme zu verdampfen, die zweite Zone (HR2) dazu angepasst ist, den verdampften, mageren Arbeitsfluidstrom (S 175) mit von dem Abgasstrom (FG12) bezogener Wärme zu erwärmen und die dritte Zone (HR3) dazu angepasst ist, den mageren, verdampften Arbeitsfluidstrom zu überhitzen, den fetten Arbeitsfluidstrom zu überhitzen und einen erschöpften, mageren Arbeitsfluidstrom nachzuerwärmen.

8. System nach Anspruch 3, wobei der Abgasstrom (FG12) ein Gemisch aus einem heißen Abgasstrom (FG10) und einem Anteil eines erschöpften Abgasstroms (FG26) umfasst.

## Revendications

1. Un processus d'extraction d'énergie d'un fluide de travail à composants multiples comprenant les opérations suivantes :
la formation d'un flux de fluide de travail riche, très haute pression, totalement condensé (108) à partir d'un flux de fluide de travail riche usé (S146) et d'un flux de fluide de travail riche (S110), où le flux de fluide de travail riche possède une concentration élevée d'un composant à bas point d'ébullition du fluide de travail à composants multiples,
la formation d'un flux de fluide de travail pauvre, très haute pression, totalement condensé (S 174) à partir d'une première partie d'un flux de fluide de travail riche, très haute pression, partiellement vaporisé (S 122) et d'un flux de liquide plus pauvre (S 172) possédant une concentration plus faible du composant à bas point d'ébullition du fluide à composants multiples, où le flux de fluide de travail pauvre, très haute pression, totalement condensé (S 174) possède une concentration faible du composant à bas point d'ébullition du fluide de travail, à composants multiples,
la vaporisation d'une deuxième partie du flux de fluide de travail riche, très haute pression, partiellement vaporisé (S 124) avec la chaleur dérivée d'un flux de gaz brûlés mélangés (FG12) et d'un flux de fluide de travail intermédiaire usé (S126) de façon à former un flux de fluide de travail riche, très haute pression, totalement vaporisé (S 134),
la vaporisation du flux de fluide de travail pauvre, très haute pression, totalement condensé (S174) avec la chaleur dérivée du flux de gaz brûlés mélangés (FG12) et d'un flux de fluide de travail riche, à pression intermédiaire, usé (S 142) de façon à former un flux de fluide de travail pauvre, très haute pression, totalement vaporisé (S 184) et un flux de fluide de travail riche, à pression intermédiaire, usé, refroidi (S144),
l'extraction d'une première quantité de courant électrique ou autre énergie utilisable d'une partie de l'énergie thermique se trouvant dans le flux de fluide de travail pauvre, très haute pression, totalement vaporisé (S 184) dans une première turbine haute pression (T) de façon à former un flux de fluide de travail pauvre usé (S 188),
la formation d'un flux de fluide de travail intermédiaire totalement vaporisé (S 152) à partir d'une première partie du flux de fluide de travail riche très haute pression totalement vaporisé (S 136) et d'un flux de fluide de travail pauvre usé réchauffé (S150), où le flux de fluide de travail intermédiaire totalement vaporisé (S152) possède une concentration du composant à bas point d'ébullition du fluide à composants multiples entre la concentration élevée du fluide de travail riche et la concentration faible du fluide de travail pauvre,
l'extraction d'une deuxième quantité de courant électrique ou autre énergie utilisable d'une partie de l'énergie thermique se trouvant dans le flux de fluide de travail intermédiaire totalement vaporisé (S152) dans une turbine à faible concentration (LCT) de façon à former le flux de fluide de travail intermédiaire usé (S 126),
l'extraction d'une troisième quantité de courant électrique ou autre énergie utilisable d'une partie de l'énergie thermique se trouvant dans une deuxième partie du flux de fluide de travail riche haute pression (S138) dans une deuxième turbine haute pression (HPT) de façon à former le flux de fluide de travail riche, à pression intermédiaire, usé (S 142), et
l'extraction d'une quatrième quantité de courant électrique ou autre énergie utilisable d'une partie de l'énergie thermique se trouvant dans le flux de fluide de travail riche, à pression intermédiaire, usé, refroidi (S 144), dans une turbine à basse pression (LPT) de façon à former le flux de fluide de travail riche usé (S146).

2. Le processus selon la Revendication 1, comprenant en outre les opérations suivantes :
l'extraction d'une partie de l'énergie thermique se trouvant dans un flux de fluide de travail pauvre, très haute pression, totalement vaporisé (S 186) possédant les paramètres indiqués au point (401) dans une première turbine haute pression (T) de façon à produire une première quantité d'énergie utilisable formant un flux de fluide de travail pauvre usé (S188) possédant les paramètres indiqués au point (402),
le réchauffage du flux de fluide de travail pauvre usé (S188) possédant les paramètres indiqués au point (402) dans un générateur de vapeur à récupération de chaleur utilisant la chaleur provenant d'un flux de gaz brûlés mélangés de façon à former un flux de fluide de travail pauvre usé réchauffé (S 150) possédant le paramètre indiqué au point (408),
le mélange du flux de fluide de travail pauvre usé réchauffé (S150) possédant le paramètre indiqué au point (408) avec une première partie ajustée en pression d'un flux de fluide de travail riche, très haute pression, totalement vaporisé (S 148) possédant le paramètre indiqué au point (421) de façon à former un flux de fluide de travail à composition intermédiaire totalement vaporisé (S 152) possédant le paramètre indiqué au point (411),
l'extraction d'une partie de l'énergie thermique se trouvant dans le flux de fluide de travail à composition intermédiaire totalement vaporisé (S152) possédant le paramètre indiqué au point (411) dans une turbine à faible concentration (LCT) de façon à produire une deuxième quantité d'énergie utilisable formant un flux de fluide de travail intermédiaire usé (S 126) possédant le paramètre indiqué au point (316),
l'extraction de l'énergie thermique d'une deuxième partie du flux de fluide de travail riche, très haute pression, totalement vaporisé (S140) possédant le paramètre indiqué au point (410) dans une deuxième turbine haute pression (HPT) de façon à produire une troisième quantité d'énergie utilisable formant un flux de fluide de travail riche, à pression intermédiaire, usé (S142) possédant le paramètre indiqué au point (412),
le passage du flux de fluide de travail riche, à pression intermédiaire, usé (S142) possédant le paramètre indiqué au point (412) à contre-courant avec un flux de fluide de travail pauvre très haute pression (S 175) possédant les paramètres indiqués au point (212) dans une première unité d'échange thermique formant un flux de fluide de travail pauvre, très haute pression, chauffé (S176) possédant le paramètre indiqué au point (203) et un flux de fluide de travail riche, à pression intermédiaire, refroidi (S144) possédant les paramètres indiqués au point (413),
l'extraction de l'énergie thermique du flux de fluide de travail riche, à pression intermédiaire, refroidi (S144) possédant les paramètres indiqués au point (413) dans une turbine à basse pression (LPT) de façon à produire une quatrième quantité d'énergie utilisable formant un flux de fluide de travail riche usé (S 146) possédant le paramètre indiqué au point (138),
la condensation totale du flux de fluide de travail riche usé (S 146) possédant le paramètre indiqué au point (138) dans un sous-système de compression thermique et de condensation (CTCSS) de façon à former un premier flux de fluide de travail riche totalement condensé (S 102) possédant le paramètre indiqué au point (129),
la pressurisation du premier flux de fluide de travail riche totalement condensé (S102) possédant les paramètres indiqués au point (129) et d'un deuxième flux de fluide de travail riche totalement condensé (S114) possédant les paramètres indiqués au point 98 de façon à former un premier flux de fluide de travail riche, très haute pression, totalement condensé (S 104) possédant les paramètres indiqués au point (100) et un deuxième flux de fluide de travail riche, très haute pression, totalement condensé (S 106) possédant les paramètres indiqués au point (92),
le mélange des premier et deuxième flux de fluide de travail riche, très haute pression, totalement condensé (S 104) et (S 106) de façon à former un flux de fluide de travail riche, très haute pression, totalement condensé combiné (S 108) possédant les paramètres indiqués au point (91),
le passage du flux de fluide de travail riche, très haute pression, totalement condensé combiné (S 108) possédant les paramètres indiqués au point (91) à contre-courant avec un deuxième flux de fluide de travail riche (S110) possédant les paramètres indiqués au point (95) dans un premier échangeur thermique (HE11) formant le deuxième flux de fluide de travail riche totalement condensé (S 114) possédant les paramètres indiqués au point (98) et un flux de fluide de travail riche, très haute pression, chauffé (S112) possédant les paramètres indiqués au point (101),
le passage du flux de fluide de travail riche, très haute pression, chauffé (S112) possédant les paramètres indiqués au point (101) à contre-courant avec une première partie d'un flux de fluide de travail, à composition intermédiaire, usé, refroidi (S116) possédant les paramètres indiqués au point (206) dans un deuxième échangeur thermique (HE 12) formant la première partie refroidie du flux de fluide de travail, à composition intermédiaire, usé, refroidi (S 120) possédant les paramètres indiqués au point (108) et un flux de fluide de travail riche, très haute pression, partiellement vaporisé (S118) possédant les paramètres indiqués au point (300),
le passage d'une première partie du flux de fluide de travail riche, très haute pression, partiellement vaporisé (S124) possédant les paramètres indiqués au point (305) à contre-courant avec le flux de fluide de travail à composition intermédiaire usé (S 126) possédant les paramètres indiqués au point (316) dans un troisième échangeur thermique (HE13) formant un flux de fluide de travail, à composition intermédiaire, refroidir (S130) possédant les paramètres indiqués au point (205) et un flux de fluide de travail riche, très haute pression, vaporisé (S128) possédant les paramètres indiqués au point (309),
l'envoi d'une deuxième partie du flux de fluide de travail à composition intermédiaire refroidi (S154) possédant les paramètres indiqués au point (207) dans une partie inférieure d'un épurateur (SC2) et d'une première partie d'un flux de liquide pauvre (S 168) possédant les paramètres indiqués au point (102) dans un sommet de l'épurateur (SC2),
le retrait d'un flux de liquide très pauvre (S 170) possédant les paramètres indiqués au point (103) d'une partie inférieure de l'épurateur (SC2) et d'un premier flux de vapeur enrichi (S156) possédant les paramètres indiqués au point (109),
le mélange du premier flux de vapeur enrichi (S 156) possédant les paramètres indiqués au point (109) avec la première partie refroidie du flux de fluide de travail, à composition intermédiaire, usé, refroidi (S 120) possédant les paramètres indiqués au point (108) de façon à former un deuxième flux mélangé (S158) possédant les paramètres indiqués au point (110),
la séparation du deuxième flux mélangé (S158) possédant les paramètres indiqués au point (110) dans un séparateur par gravité (S 10) de façon à former un deuxième flux de vapeur enrichi (S 160) possédant les paramètres indiqués au point (111) et du flux de liquide pauvre (S162) possédant les paramètres indiqués au point (112),
le mélange d'une deuxième partie du flux de liquide pauvre (S 166) possédant les paramètres indiqués au point (114) avec le deuxième flux de vapeur enrichi (S 160) possédant les paramètres indiqués au point (111) de façon à former le deuxième flux de fluide de travail riche (S110) possédant les paramètres indiqués au point (95),
le mélange d'un flux très pauvre, ajusté en pression (S172) possédant les paramètres indiqués au point (201) avec une deuxième partie du flux de fluide de travail riche, très haute pression, partiellement vaporisé (S 122) possédant les paramètres indiqués au point (303) de façon à former un flux de fluide de travail pauvre totalement condensé (S174) possédant les paramètres indiqués au point (202),
la pressurisation du flux de fluide de travail pauvre totalement condensé (S 174) possédant les paramètres indiqués au point (202) de façon à former le flux de fluide de travail pauvre, très haute pression, totalement condensé (S175) possédant les paramètres indiqués au point (212),
la vaporisation totale du flux de fluide de travail pauvre, très haute pression, chauffé (S176) possédant les paramètres indiqués au point (203) à contre-courant avec le flux de gaz brûlés mélangés de façon à former le flux de fluide de travail pauvre, très haute pression, totalement vaporisé (S186) possédant les paramètres indiqués au point (401), et
la vaporisation totale de la première partie du flux de fluide de travail riche, très haute pression, vaporisé (S 128) possédant les paramètres indiqués au point (309) à contre-courant avec le flux de gaz brûlés mélangés de façon à former le flux de fluide de travail riche, très haute pression, totalement vaporisé (S134) possédant les paramètres indiqués au point (409).

3. Un système d'extraction d'énergie dans un cycle thermodynamique comprenant :
un sous-système de vaporisation comprenant un générateur de vapeur à récupération de chaleur soit seul ou en combinaison avec une unité d'échange thermique distincte (HE16) adaptée de façon à (a) vaporiser totalement un flux de fluide de travail pauvre très haute pression (S 175) comprenant une première partie d'un flux de fluide de travail riche, très haute pression, partiellement vaporisé (S 122) et un flux de liquide très pauvre (S 172), (b) vaporiser totalement une première partie d'un flux de fluide de travail riche très haute pression (S124), et (c) réchauffer un flux de fluide de travail pauvre usé (S 188) à partir de la chaleur dérivée d'un flux de gaz brûlés mélangés (FG12) formant un flux de fluide de travail pauvre, très haute pression, totalement vaporisé (S 184), un flux de fluide de travail riche, très haute pression, totalement vaporisé (S134), et un flux de fluide de travail pauvre usé, réchauffé (S150),
un sous-système de conversion d'énergie comprenant :
une première turbine haute pression (T) adaptée de façon à convertir une partie de l'énergie thermique du flux de fluide de travail pauvre, très haute pression, totalement vaporisé (S 184) en une première quantité d'énergie utilisable formant le flux de fluide de travail pauvre usé (S 188), une turbine à faible concentration (LCT) adaptée de façon à convertir une partie de l'énergie thermique du flux de fluide de travail intermédiaire totalement vaporisé (S 152) en une deuxième quantité d'énergie utilisable, où le flux de fluide de travail intermédiaire totalement vaporisé (S 152) comprend une première partie d'un flux de fluide de travail riche, totalement vaporisé, ajusté en pression (S 136) et le flux de fluide de travail pauvre usé, réchauffé (S 150) formant un flux de fluide de travail intermédiaire usé (S 126), et une unité d'extraction de flux de fluide de travail riche comprenant :
une deuxième turbine haute pression ou étage (HPT) adapté de façon à convertir une partie de l'énergie thermique avec une deuxième partie du flux de fluide de travail riche, très haute pression, totalement vaporisé (S 134) en une troisième quantité d'énergie utilisable formant un flux de fluide de travail riche, à pression intermédiaire, usé (S 142) et
une turbine à basse pression ou étage (LPT) adapté de façon à convertir une partie de la chaleur associée à un flux de fluide de travail riche, à pression intermédiaire, usé, refroidi (S 144) en une quatrième quantité d'énergie utilisable de façon à former un flux de fluide de travail riche usé (S 146),
un sous-système de séparation comprenant :
un épurateur (SC2) adapté de façon à épurer et séparer une première partie d'un flux de fluide de travail intermédiaire, usé, refroidi (S 154) et une première partie d'un flux de liquide pauvre (S 164) en un premier flux de vapeur enrichi (S156) et le flux de liquide très pauvre (S170), et
un séparateur (S10) adapté de façon à séparer un flux mélangé (S158) comprenant une deuxième partie refroidie du flux de fluide de travail intermédiaire, usé, refroidi (S 120) et le premier flux de vapeur enrichi (S 156) en un deuxième flux de vapeur enrichi (S 160) et le flux de liquide pauvre (S162), un sous-système de condensation comprenant :
un condenseur ou un sous-système de compression thermique et de condensation adapté de façon à condenser totalement le flux de fluide de travail riche usé (S146) en un premier flux de fluide de travail riche totalement condensé (S 102), et
un sous-système d'échange thermique comprenant :
une première unité d'échange thermique (HE11) adaptée de façon à condenser totalement un deuxième flux de fluide de travail riche comprenant le deuxième flux de vapeur enrichi et une deuxième partie du flux de liquide pauvre et de façon à chauffer un flux de fluide de travail riche, très haute pression, combiné comprenant un premier flux de fluide de travail riche, très haute pression, totalement condensé et un deuxième flux de fluide de travail riche, très haute pression, totalement condensé,
une deuxième unité d'échange thermique (HE 12) adaptée de façon à vaporiser partiellement le flux de fluide de travail riche combiné et de façon à refroidir la deuxième partie du flux de fluide de travail intermédiaire usé formant un flux de fluide de travail riche, très haute pression, partiellement vaporisé et la deuxième partie refroidie du flux de fluide de travail intermédiaire, usé, refroidi, et
une troisième unité d'échange thermique (HE13) adaptée de façon à vaporiser une deuxième partie du partiellement vaporiser du [*sic*] flux de fluide de travail riche combiné partiellement vaporisé et de façon à refroidir le flux de fluide de travail intermédiaire usé formant le flux de fluide de travail riche, très haute pression, vaporisé et le fluide de travail intermédiaire, usé, refroidi.

4. Le système selon la Revendication 3, comprenant en outre :
un sous-système de pressurisation comprenant :
une première pompe (P16) adaptée de façon à augmenter une pression du premier flux de fluide de travail riche totalement condensé de façon à former le premier flux de fluide de travail riche, très haute pression, totalement condensé,
une deuxième pompe (P11) adaptée de façon à augmenter une pression du deuxième flux de fluide de travail riche totalement condensé de façon à former le deuxième flux de fluide de travail riche, très haute pression, totalement condensé,
une troisième pompe (P14) adaptée de façon à augmenter une pression du flux de fluide de travail pauvre totalement condensé de façon à former le flux de fluide de travail pauvre, très haute pression, totalement condensé.

5. Le système selon la Revendication 3, où le sous-système de vaporisation comprend un générateur de vapeur à récupération de chaleur, qui utilise l'énergie thermique d'un flux de gaz brûlés mélangés (FG12) comprenant un flux de gaz brûlés initial chaud (FG10) et une partie d'un flux de gaz brûlés usé (FG26), grâce à quoi la température du flux de gaz brûlés initial chaud est réduite de façon à réduire l'endommagement du générateur de vapeur à récupération de chaleur.

6. Le système selon la Revendication 3, où la première unité d'échange thermique est un premier échangeur thermique (HE11), la deuxième unité d'échange thermique est un bouilleur-condenseur (HE12), et la troisième unité d'échange thermique est un échangeur thermique à récupération de chaleur (HE13).

7. Le système selon la Revendication 3, où le sous-système de vaporisation est un générateur de vapeur à récupération de chaleur possédant trois zones d'échange thermique, la première zone (HR1) étant adaptée de façon à vaporiser le flux de fluide de travail pauvre (S 175) avec la chaleur dérivée d'un flux de gaz brûlés (FG12) et d'un flux de fluide de travail riche très haute pression usé (S142), la deuxième zone (HR2) étant adaptée de façon à chauffer le flux de fluide de travail pauvre vaporisé (S175) avec la chaleur dérivée du flux de gaz brûlés (FG12), et la troisième zone (HR3) est adaptée de façon à surchauffer le flux de fluide de travail pauvre vaporisé, à surchauffer le flux de fluide de travail riche et à réchauffer un flux de fluide de travail pauvre usé.

8. Le système selon la Revendication 3, où le flux de gaz brûlés (FG12) comprend un mélange d'un flux de gaz brûlés chaud (FG10) et d'une partie d'un flux de gaz brûlés usé (FG26).
